Europäisches Patentamt

European Patent Office

Office européen des brevets

(19)

(11)  EP 1 184 708 A2

(12)  **EUROPEAN PATENT APPLICATION**

(43) Date of publication:
06.03.2002  Bulletin 2002/10

(51) Int Cl.⁷: **G02B 27/28**, G02B 27/10,
G02B 5/28, H04J 14/02

(21) Application number: 01120703.2

(22) Date of filing: 04.09.2001

(84) Designated Contracting States:
**AT BE CH CY DE DK ES FI FR GB GR IE IT LI LU
MC NL PT SE TR**
Designated Extension States:
**AL LT LV MK RO SI**

(30) Priority: 04.09.2000  JP 2000266533
04.12.2000  JP 2000368465
14.03.2001  JP 2001071830

(71) Applicant: **Nippon Sheet Glass Co., Ltd.
Osaka-shi, Osaka (JP)**

(72) Inventors:
• **Kittaka, Shigeo
  Chuo-ku, Osaka-shi, Osaka (JP)**
• **Nara, Masatoshi
  Chuo-ku, Osaka-shi, Osaka (JP)**
• **Nakazawa, Tatsuhiro
  Chuo-ku, Osaka-shi, Osaka (JP)**
• **Koyama, Tadashi
  Chuo-ku, Osaka-shi, Osaka (JP)**
• **Asai, Takahiro
  Chuo-ku, Osaka-shi, Osaka (JP)**

(74) Representative: **HOFFMANN - EITLE
Patent- und Rechtsanwälte Arabellastrasse 4
81925 München (DE)**

(54)  **Optical device and spectroscopic and polarization separating apparatus using the same**

(57)    An optical device in which an end surface of a periodic multilayer structure is provided as a beam incidence surface or as a beam exit surface. The optical device can realize a high-resolving-power spectroscopic apparatus without having any increase in size of the apparatus and by use of good directivity of beam leaked from the multilayer structure and strong wavelength dependence of an angle of the leaked beam.

FIG.1

(MEDIUM M1)

(MEDIUM M2)

EP 1 184 708 A2

**Description**

BACKGROUND OF THE INVENTION

The present invention relates to an optical device and a spectroscopic apparatus used in an optical communication system, an optical measuring system, or the like.

Particularly the present invention relates to a novel technique adapted to a spectroscopic optical device for separating beam into beam components different in wavelength or a polarization separating optical device for separating beam into beam components different in the direction of polarization.

Increase in capacity of an optical fiber communication network has been strongly demanded because of the rapid advance of popularization of Internet. Development of wavelength division multiplexing (WDM) communication as means for increasing the capacity has been advanced rapidly. An optical function device such as an optical demultiplexer, a filter or an isolator good in wavelength selectivity is necessary for such WDM communication because beam components with slightly different wavelengths are used for trans ferringdifferent kinds of information individually. It is a matter of course that the aforementioned function device is strongly demanded in mass-production efficiency, reduction in size, integration in density, stability, and so on.

An optical demultiplexer (or a spectroscope) is used for the purpose of performing demultimplexing/detection of optical signals with a plurality of wavelengths multiplexed artificially as represented by wavelength of division multiplexing of optical communication, or for the purpose of spectrally analyzing beam to be measured as represented by spectroscopic measurement. The optical demultiplexer requires a spectroscopic device such as a prism, a wave filter, a diffraction grating, or the like. Especially, a diffraction grating is a representative spectroscopic device. A device having a periodic fine corrugated structure formed on a surface of a substrate of quartz, silicon or the like is used as the diffraction grating. Diffracted beam components generated by the periodic corrugated structure interfere with one another, so that beam with a certain specific wavelength is made to exit in a specific direction. This characteristic is used as one of a demultiplexing device.

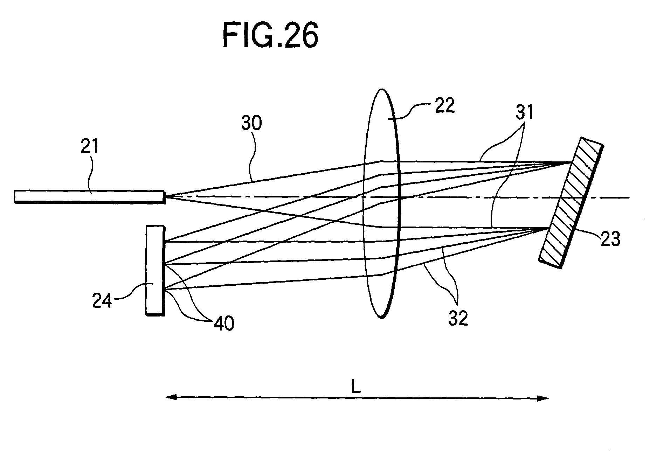

Fig. 26 shows an example of a spectroscopic optical system using such a diffraction grating. Wavelength-multiplexed beam rays 30 emitted from an optical fiber 21 are collimated by a collimator lens 22 to form collimated beam 31. The collimated beam 31 is made incident on a diffraction grating 23. The beam is demultiplexed by the diffraction grating 23, so that the beam components are made to exit from the diffraction grating 23 at different exit angles in accordance with the wavelengths. The exit beam components 32 pass through the collimator lens 22 again and form a set of condensed beam spots 40 on a beam-receiving surface 24. If photo-detectors such as photodiodes or end surfaces of optical fibers are placed as beam-receiving means in the positions of the set of condensed beam spots respectively, signal outputs separated in accordance with predetermined wavelengths can be obtained. If beam incident on the diffraction grating has a continuous spectrum, a spectrally discrete output can be obtained in accordance with the interval between the beam-receiving means placed on the beam-receiving surface.

In the case of a reflection type diffraction grating, there holds the expression:

$$Sin\theta i + sin\theta o = s\lambda/d$$

in which $s$ is the diffraction order of the diffraction grating, $d$ is the grating constant thereof, $\lambda$ is the wavelength used, $\theta i$ is the angle between a line normal to the surface where the diffraction grating is formed and incident beam (the optical axis 5 of the optical fiber), and $\theta o$ is the angle between the normal line and exit beam rays.

When the wavelength changes by $\Delta\lambda$ while $\theta i$ is kept constant, the change $\Delta x$ of the position of beam reaching the beam-receiving surface distanced by the distance L from the diffraction grating is given by the expression:

$$\Delta x = (Ls/(d\cdot cos\theta o))\cdot\Delta\lambda$$

Accordingly, if beam-receiving means are placed on the beam-receiving surface so as to be arranged at intervals of a positional distance calculated on the basis of the aforementioned expression in accordance with the wavelength distance, signals separated in accordance with the wavelengths can be obtained.

The wavelength dependence of the angle of beam made to exit from the diffraction grating is, however, low. Assume now the case where beam is to be demultiplexed at wavelength intervals of 0.8 nm (which correspond to frequency intervals of 100 GHz) in a 1.55 μm-wavelength band used in optical communication. When the diffraction order $s$, the incident angle $\theta i$ and the exit angle $\theta o$ are 25, 71.5° and 38.5° respectively, the grating constant $d$ of the diffraction grating is 24.7 μm. In this system, the change of the exit angle obtained with respect to the wavelength distance of 0.8 nm is merely about 0.06°. Therefore, the distance L of 48 mm is required for the beam spots separately received by the beam-receiving devices arranged at intervals of 50 μm.

That is, the change $\Delta x$ of the position of each of the beam spots on the beam-receiving surface generally needs to be not smaller than several tens μm because each of the beam-receiving means has a predetermined size. Because $s$ and $d$ which are constants of the diffraction grating cannot be changed largely, the distance L needs to be large enough to obtain necessary Δx in accordance with the small wavelength change Δλ. Accordingly, in order to improve the performance of the optical demultiplexer using the diffraction grating, there brings a problem that large-sized apparatus cannot be avoided.

Moreover, because there is no diffraction angle difference in the direction of polarization, polarization separation in accordance with angle cannot be performed by the general diffraction grating. Hence, when the optical system needs a polarization separating function, a polarization separating device may be required separately from the diffraction grating.

An object of the present invention is to provide a novel optical device substituted for a diffraction grating.

Another object of the present invention is to provide an optical device which produces a larger angle change with respect to wavelength than that produced by the diffraction grating, that is, to provide an optical device having larger chromatic dispersion characteristic.

A further object of the present invention is to provide an optical device having a function of separating polarized beam in accordance with angle as well as a function of such chromatic dispersion.

A further object of the present invention is to provide a spectroscopic optical system or a polarization separating optical system the size of which is reduced by use of such an optical device.

SUMMARY OF THE INVENTION

According to the present invention, there is provided an optical device comprising a periodic multilayer structure, wherein an end surface of the multilayer structure which is not parallel to layer surfaces of the multilayer structure is used as at least one of a beam incidence surface and a beam exit surface.

On this occasion, the length $\underline{a}$ of one period in the periodic multilayer structure with respect to a wavelength λ used is required to be set in a range given by an expression:

$$\lambda/2n_M \leq a$$

in which $n_M$ is an average refractive index in the one-period range of the multilayer structure in the wavelength λ.

In the periodic multilayer structure, at least one period needs to be constituted by two layers of different materials. A layer varying continuously in terms of composition or characteristic may be contained in the boundary between every two layers constituting the multilayer structure. It is, however, preferable that the maximum refractive index difference between the plurality of materials constituting the multilayer structure is not smaller than 0.1 in the wavelength used.

Typically, an end surface of the periodic multilayer structure on which beam is incident and/or an end surface of the periodic multilayer structure from which beam is made to exit may be set to cross layer surfaces of the multilayer structure perpendicularly. Alternatively, an end surface of the periodic multilayer structure on which beam is incident and an end surface of the periodic multilayer structure from which beam is made to exit are set to be parallel to each other.

The typical configuration of the multilayer structure is constituted by an optical multilayer film in which one structure formed on a substrate transparent with respect to the wavelength used is repeated periodically.

A spectroscopic apparatus can be configured by use of the aforementioned optical device and by providing means for making a mixture of various luminous flux having a plurality of wavelengths incident on the beam incidence end surface of the optical device and means for making beam rays exit from the beam exit end surface of the optical device toward the substrate at difference.angles in accordance with the wavelengths. In this configuration, the multilayer structure constituting the optical device may be provided as an optical multilayer film formed on a surface of a substrate transparent with respect to the wavelength used. Hence, there can be achieved the configuration in which beam rays made to exit from the multilayer film toward the substrate are totally reflected in the inside of the substrate and taken out from an end surface of the substrate.

In the present invention, the optical device is configured so that an end surface of the periodic multilayer structure is provided as a beam incidence surface or as a beam exit surface. Hence, good directivity of beam leaked from the multilayer structure and strong wavelength dependence of an angle of the leaked beam are utilized.

According to the present invention, there is provided an optical device comprising a periodic multilayer structure regarded as a one-dimensional photonic crystal in which: an end surface approximately perpendicular to layer surfaces of the multilayer structure is provided as a beam incidence surface; at least one surface parallel to the layer surfaces is provided as a beam exit surface; and a length of one period is $\underline{a}$ and satisfies a condition given by an expression:

$$\lambda_0/2n_M \leq a$$

when $n_M$ is an average refractive index in one period of the periodic multilayer structure with respect to beam with a wavelength $\lambda_o$ in vacuum;
    wherein a condition:

$$0 < k_s \cdot \lambda_0/(2\pi \cdot n_S) < 1$$

is satisfied when $k_s$ is a magnitude of a wave vector of a coupled. band as a not-lowest-order band in the photonic crystal with respect to the wavelength $\lambda_0$ in a direction which is parallel to the layer surfaces and which does not have any periodic structure, and $n_S$ is a refractive index of a medium tangent to the surface parallel to the layer surfaces and serving as the beam exit surface of the multilayer structure, with respect to the wavelength $\lambda_0$. The incidence surface and the exit surface may be replaced with each other.

More preferably, the coupled band is a second coupled band from a lowest-order band. Of the above-mentioned condition range, a range satisfying an expression:

$$\cos 60° \leq k_S \cdot \lambda_0 / (2\pi \cdot n_S) \leq \cos 20°$$

is further preferable.

Further desirably, the $k_s$ satisfies a condition:

$$0.9 k_1/m \leq k_s \leq 1.1 k_1/m$$

(m is an integer not smaller than 2) when $k_1$ is a magnitude of a wave vector of the lowest-order coupled band.

In the range satisfying the above condition, preferably, the periodic multilayer structure is configured to be an optical multilayer film in which one structure formed on a transparent substrate is repeated periodically with respect to a wavelength used; and a surface of the multilayer film tangent to the substrate is provided as the beam incidence surface or as the beam exit surface. On the occasion, the one period in the periodic multilayer structure may be constituted by layers formed out of difference materials, and a layer varying continuously in terms of composition or characteristic may be contained in a boundary between every two layers constituting the periodic multilayer structure. Desirably, a ratio of a maximum refractive index to a minimum refractive index of a plurality of materials constituting the periodic multilayer structure is not smaller than 1.1 in a wavelength used. Further desirably, it is easy to use air or vacuum as a medium tangent to the surface of the multilayer structure which serves as the beam incidence surface or the beam exit surface.

There can be provided a spectroscopic apparatus comprising the optical device constituted by the periodic multilayer structure, means for making a mixture of various luminous flux having a plurality of wavelengths incident on an end surface of the multilayer structure of the optical device, and means for detecting beam rays made to exit from a surface of the multilayer structure at different angles in accordance with the wavelengths. Further, there can be provided a polarization separating apparatus having the same configuration as that of the a spectroscopic apparatus.

The periodic multilayer structure according to the present invention can be regarded as a one-dimensional photonic crystal. Hence, an excellent spectroscopic function and an excellent polarization separating function can be obtained by the function of the photonic crystal.

The present disclosure relates to the subject matter contained in Japanese patent application Nos. 2000-266533 (filed on September 4, 2000), 2000-368465 (filed on December 4, 2000) and 2001-71830 (filed on March 14, 2001), which are expressly incorporated herein by reference in their entireties.

BRIEF DESCRIPTION OF THE DRAWINGS

Fig. 1 is a schematic view showing the basic structure of an optical device according to the present invention;
Fig. 2 is an explanatory view showing a periodic multilayer structure according to the present invention;
Fig. 3 is a view showing the relation between propagating beam and refracted beam in two layers of different homogeneous materials;
Fig. 4 is a view showing an example of a photonic band graph of TH polarized beam in the periodic multilayer structure;
Fig. 5 is a view showing an example of a photonic band graph of TE polarized beam in the periodic multilayer structure;
Fig. 6 is a view showing the relation between guided beam and refracted beam in a first band of the periodic multilayer structure;
Fig. 7 is a view showing the relation between guided beam and refracted beam in a second band of the periodic multilayer structure;
Fig. 8 is a view showing the relation between guided beam and refracted beam in a third band of the periodic multilayer structure;
Fig. 9 is a graph showing the a/λ0 change in the Z-axis direction from the origin of the photonic band graph in TH polarized beam;
Fig. 10 is a graph showing the a/λ0 change in the 2-axis direction from the origin of the photonic band graph in TE polarized beam;
Fig. 11 is a view showing the relation between the photonic band graph of the periodic multilayer structure and refracted beam from opposite side surfaces of the periodic multilayer structure;
Fig. 12 is a view showing a spectroscopic apparatus configured by use of the periodic multilayer structure;
Fig. 13 is a view showing a polarization separating apparatus configured by use of the periodic multilayer structure;

Fig. 14 is a view showing another configuration of the spectroscopic apparatus according to the present invention;

Fig. 15 is a view showing another embodiment of the optical device according to the present invention;

Fig. 16 is a view showing an optical system for evaluating the optical device according to the present invention;

Fig. 17 is a schematic view showing a spectroscopic optical system according to an embodiment of the present invention;

Fig. 18 is a view showing the characteristic of the embodiment of the present invention;

Fig. 19 is a view showing a multilayer structure sample used in an experimental optical system;

Fig. 20 is a view showing the experimental optical system;

Fig. 21 is a graph showing chromatic dispersion characteristic of an embodiment according to the present invention;

Fig. 22 is a view showing a result in an example of calculation in the present invention;

Fig. 23 is a view showing a result in another example of calculation in the present invention;

Fig. 24 is a view showing a result in a further example of calculation in the present invention;

Fig. 25 is a view showing a result in a further example of calculation in the present invention; and

Fig. 26 is a view showing an optical system of a background-art spectroscopic apparatus.

## DESCRIPTION OF THE PREFERRED EMBODIMENT

A mode for carrying out the present invention will be described below specifically.

In the present invention, a one-dimensional photonic crystal constituted by a periodic multilayer structure is used as a spectroscopic device. Because a periodic multilayer film formed from thin films each having a thickness equal to or smaller than the wavelength of beam has properties of a one-dimensional photonic crystal, the periodic multilayer film provided on a substrate such as a quartz substrate, a glass substrate or the like has been already put into practical use and used widely as an optical device such as a high reflection film, a polarization separating filter, a wavelength selective filter or the like.

In most cases, use of such an optical multilayer film is generally conceived upon the assumption of beam rays which pass through the uppermost layer surface to the lowermost layer surface of the multilayer film provided on a surface of the substrate. There is none but the following example as an example in which an end surface of the multilayer film, that is, a surface where the periodic structure is exposed is used as a beam incidence surface or as a beam exit surface.

Theoretical analysis in a direction of beam rays incident on a section of an inclined multilayer film has been described (Applied Physics B, Vol.39, p.231, 1986). The fact that the same polarization separating effect as that of a birefringent material is obtained by use of properties (so-called structural birefringence) of the multilayer film refractive index of which varies in accordance with TE and TH polarized beam has been disclosed to attempt separation of polarized beam due to structural birefringence (Optics Letters Vol.15, No.9, p. 516, 1990). There. has been further a report that the periodic multilayer film is used as a one-dimensional photonic crystal for obtaining very large dispersion (superprism effect) because the first band is shaped linearly in a neighbor of the band gap ("International Workshop on Photonic and Electromagnetic Crystal Structures" Technical Digest, F1-3).

The inventors of this application, upon consideration of those basic studies, have devised an optical device as follows.

The present invention has a feature that an end surface of a periodic multilayer structure is used as a beam incidence surface or as a beam exit surface in order to obtain a large chromatic dispersion effect.

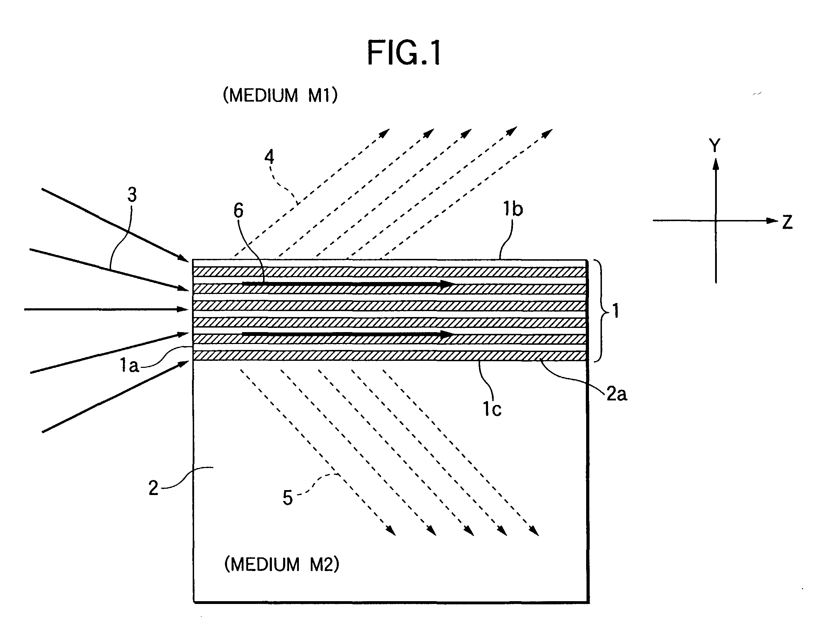

Fig. 1 shows an example of the basic embodiment of the present invention. Amultilayer structure 1 having periods in a direction (Y direction) perpendicular to a surface 2a of a plane substrate 2 is formed on the surface 2a of the plane substrate 2. For example, the multilayer structure 1 (multilayer film) is provided as a structure in which materials A (refractive index: $n_A$) each having a thickness $t_A$ and materials B (refractive index: $n_n$) each having a thickness $t_B$ are laminated alternately with $\underline{a} = (t_A + t_B)$ as a period. Incident beam 3 is made to enter the multilayer structure 1 from a surface 1b of the multilayer structure 1 in the Z-axis direction parallel to the substrate surface 2a. Thus, exit beam 4 refracted from the surface 1b of the multilayer structure 1 is taken out or exit beam 5 is taken out from a surface 1c of the multilayer structure 1. According to the configuration shown in Fig. 1, further large wavelength dispersion than that obtained in a brazed diffraction grating provided on a homogeneous material such as glass can be obtained.

According to the inventors' experiment, when laser beam 3 with a wavelength $\lambda$ is made incident on the end surface 1a of the multilayer structure (multilayer film) 1 after the end surface 1a is polished, a large part of beam serves as guided beam 6 in the inside of the multilayer film 1. A part of beam, however, serves as beam 5 leaked to the substrate side (medium M2 side) and/or as beam 4 leaked to a side opposite to the substrate side (medium M1 side). The direction (angle θ) of the leaked beam 4 or 5 is approximately constant with respect to the wavelength $\lambda$, so that the leaked beam 4 or 5 forms luminous flux with very good directivity. Moreover, because the value of θ varies largely in accordance with the value of $\lambda$, the multilayer structure 1 can be used as a high-resolving-power spectroscopic device.

The principle of the aforementioned phenomenon will be described in brief.

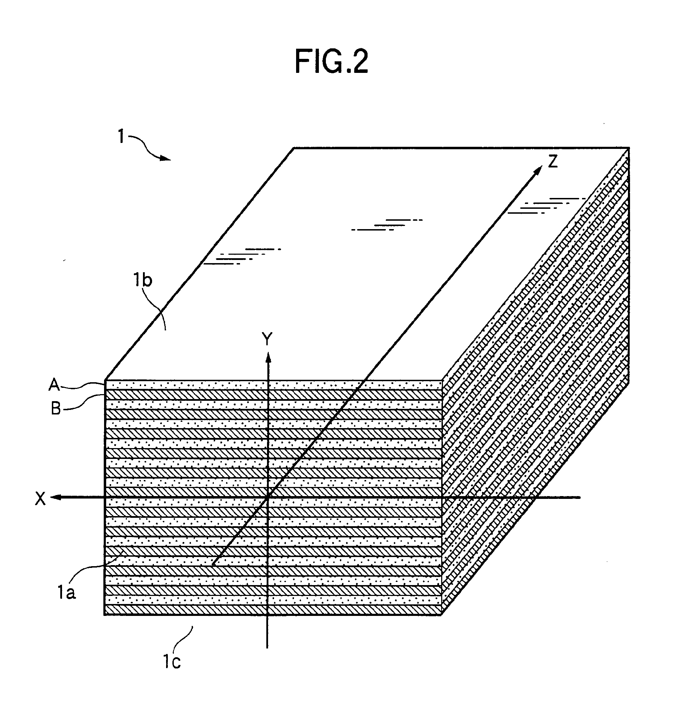

Fig. 2 is a perspective view showing an example of the periodic multilayer structure 1 which is a subject of the present invention. Materials A each having a refractive index $n_A$ and a thickness $t_A$ and materials B each having a refractive index $n_B$ and a thickness $t_B$ are laminated stratiformly alternately in the Y direction. Boundary surfaces between respective layers and surfaces 1b and 1c are parallel to one another in an (X, Z) plane. Here, the boundary surfaces and the surfaces 1b and 1c are generically called "layer surfaces". The period $\underline{a}$ in the multilayer structure is equal to $(t_A + t_S)$.

If analysis is made as to how beam with a wavelength $\lambda$ is prepagated in a periodic multilayer structure 1 when the beam is incident on the end surface 1a (not parallel to the layer surfaces) of a periodic multilayer structure 1, it is found that the periodic multilayer structure 1 under a predetermined condition serves as a so-called photonic crystal to thereby exhibit an effect peculiar to the propagated beam.

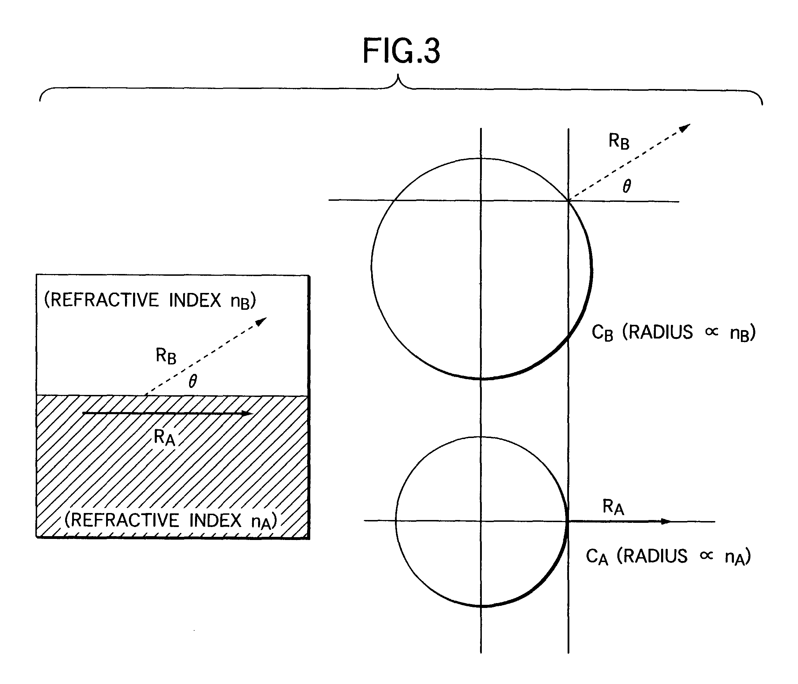

A method for expressing refraction of beam in a boundary between two media each homogeneous in refractive index by means of plotting will be described with reference to Fig. 3. Beam rays $R_A$, which advance along the vicinity of the medium A side boundary surface between the medium A with a refractive index $n_A$ and the medium B with a refractive index $n_n$ ($n_A < n_B$) so as to be parallel to the boundary surface, are emitted, as refracted beam $R_B$ with an angle $\theta$, to the medium side B.

This angle $\theta$ can be calculated on the basis of a chart plotted by use of two circles $C_A$ and $C_B$ with radii proportional to $n_A$ and $n_B$ respectively. As shown in Fig. 3, circles $C_A$ and $C_B$ are plotted. A vector having a direction corresponding to the beam rays $R_A$ is plotted as a line normal to the circle $C_A$. A line parallel to a line connecting the centers of the two circles $C_A$ and $C_B$ is plotted from a point on the circle $C_A$ to thereby obtain a point of intersection with the circle $C_B$. A vector plotted from this point of intersection in the direction of a line normal to the circle $C_B$ shows the direction of refracted beam $R_B$. This circle $C_A$ corresponds to the most basic photonic band in the case where beam with a wavelength $\lambda$ propagates in a homogeneous material A.

The multilayer structure 1 shown in Fig. 2 is provided as a structure in which materials A each having a thickness $t_A$ (refractive index: $n_A$) and materials B having a thickness $t_B$ (refractive index: $n_B$) are laminated alternately with a period as $\underline{a} = (t_A + t_B)$. The multilayer structure 1 can be regarded as a one-dimensional photonic crystal, so that a photonic band diagram can be obtained by calculation on the basis of the principle of photonic crystal. The method of calculation has been described in detail in "Photonic Crystals", Princeton University Press, 1995, Physical Review B Vol.44, No.16, p.8565, 1991, or the like.

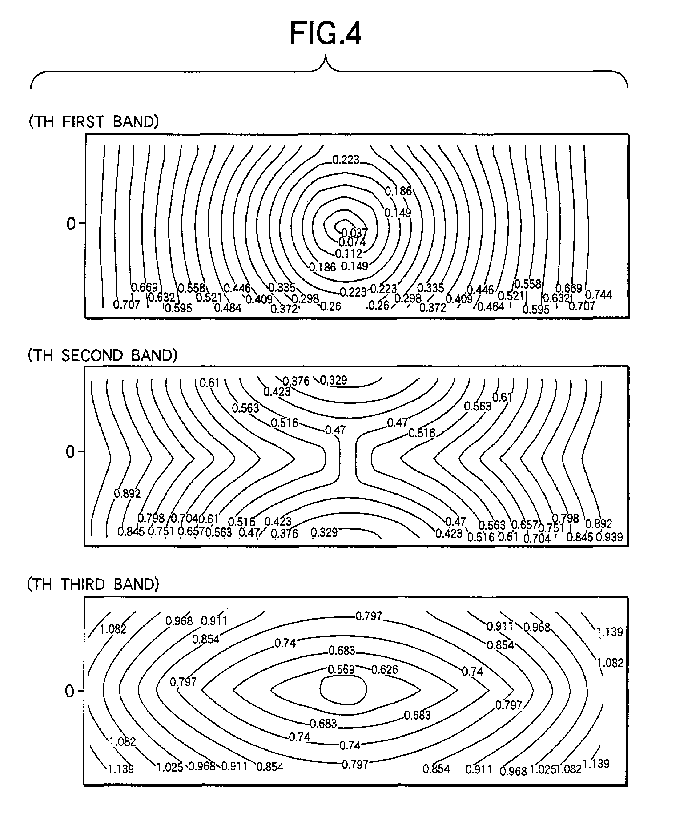

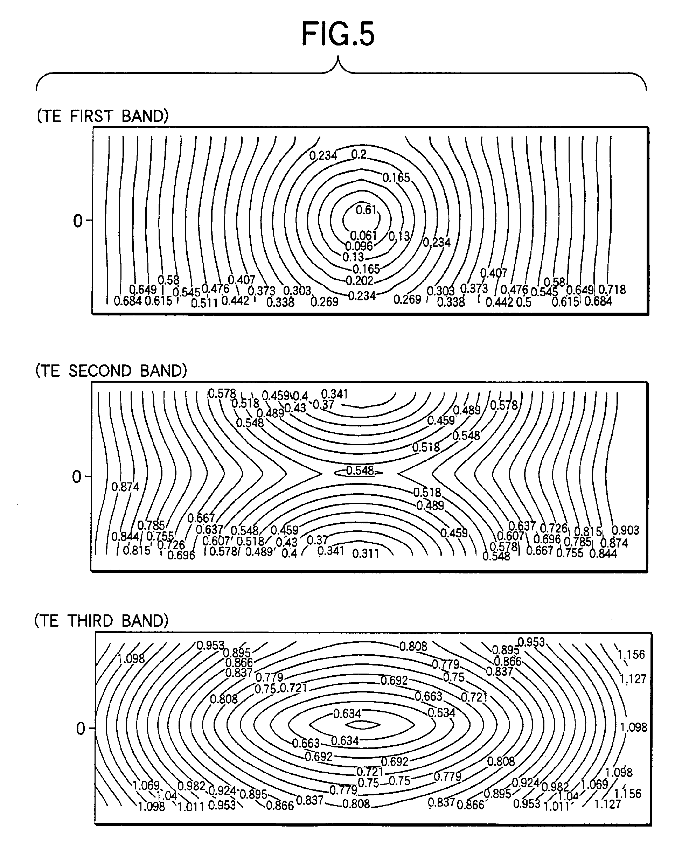

The range in the band diagram of the periodic multilayer structure is limited in the Y direction (periodic direction) of Fig. 2 but is extended infinitely in the X and Z directions (the directions of spreading a plane). Figs. 4 and 5 show results of band calculation by a plane wave method, upon first, second and third bands (in ascending order) of TH- and TE-polarized beam with respect to the multilayer film having a structure in which two kinds of layers represented by

$$n_A = 1.44 \ (t_A = 0.5a)$$

and

$$n_B = 2.18 \ (t_n = 0.5a)$$

are laminate alternately with a period of $\underline{a}$.

Here, "TH-polarized beam" means polarized beam having the direction of magnetic field as the X-axis direction, and "TE-polarized beam" means polarized beam having the direction of electric field as the X-axis direction.

Incidentally, each of the numerals given to the curves shown in Figs. 4 and 5 is a normalized frequency:

$$\omega a / 2\pi c$$

in which $\omega$ is the angular frequency of incident beam, $\underline{a}$ is the period of the multilayer structure, and $\underline{c}$ is the velocity of beam in vacuum.

The normalized frequency can be also expressed as $a/\lambda_0$ by use of the wavelength $\lambda_0$ of incident beam in vacuum. The normalized frequency will be described hereunder as $a/\lambda_0$. Figs. 4 and 5 show Brillouin zones each representing one period in a reciprocal space. The vertical axis represents the Y-axis direction in which the upper and lower boundaries express the range of $\pm\pi/a$ from the center. The horizontal axis represents the Z-axis direction (or the X-axis direction) which has no boundary because the Z-axis direction is an aperiodic direction. The left and right ends in each of the charts shown in Figs. 4 and 5 are provided to show the range of calculation for convenience' sake. In each Brillouin zone, a position means a wave vector in the multilayer structure, and a curve means a band corresponding to the wavelength $\lambda_0$ of incident beam.

In a band diagram of the periodic multilayer structure, discontinuity (so-called photonic band gap) occurs when $a/\lambda_0$ is larger than a certain value.

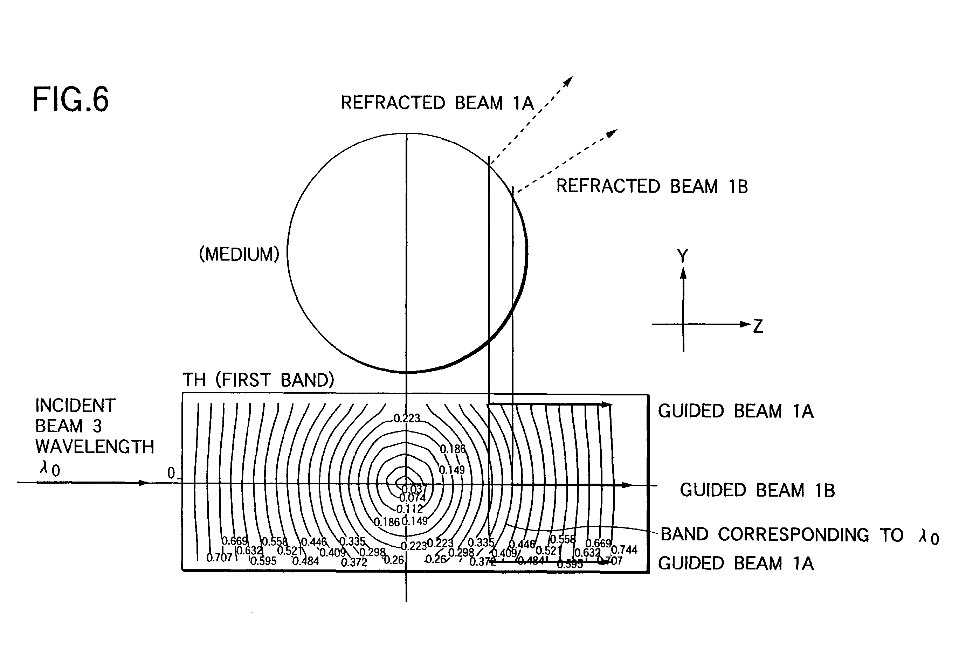

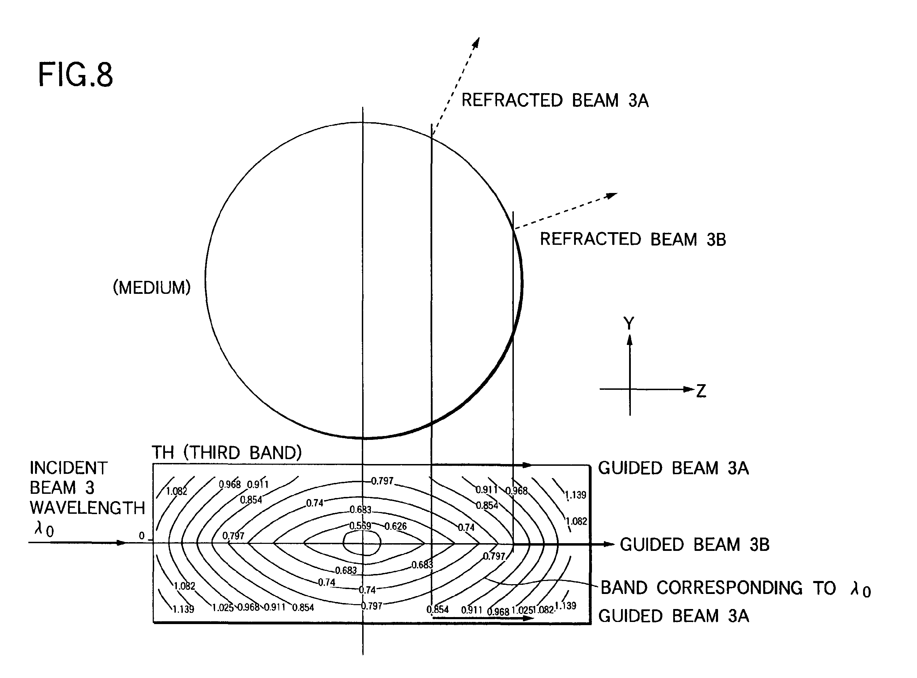

Figs. 6 to 8 are charts of the first, second and third TH bands respectively each having the relation between guided beam in the Z-axis direction and refracted beam thereof toward the medium tangent to the surface of the multilayer structure when incident beam 3 with a wavelength $\lambda_0$ enters the periodic multilayer structure.

Because beam rays in the multilayer structure can be expressed as lines normal to curves shown in each of the band diagrams, the guided beams in the Z-axis direction in the first, second and third bands can be expressed, respectively, as 1A and 1B, 2A and 2B, and 3A and 3B in Figs. 6 to 8. According to the inventors' research, the guided beams especially having large intensity are 1B and 3B. The respective guide beam is made to exit as refracted beam from the boundary surface between the multilayer structure and the medium tangent to the surface of the multilayer structure. To emit the refracted beam, however, it is necessary that the refractive index of the medium expressed by the radius of each circle is higher than a predetermined value as is obvious from Figs. 6 to 8.

The angle θ of refracted beam with respect to the corresponding guided beam is kept approximately constant. Hence, it is expected the exit beam serves as luminous flux with very good directivity. Because the value of θ varies largely in accordance with the wavelength λ of incident beam, high-resolving-power wavelength separation can be achieved. Hence, the multilayer structure configured as shown in Fig. 1 can be used as a high-resolving-power spectroscopic device.

The band diagram of TE-polarized beam is different from that of TH-polarized beam. Because the value of θ varies largely in accordance with polarized beam even in the case where the wavelength of beam is constant, the optical device according to the present invention can be also used for separation of polarized beam.

The condition concerning the average refractive index of the multilayer structure suitable for the present invention and the period of the multilayer structure can be given by the expression:

$$\lambda_0/2n_M \leq a$$

If this condition can be satisfied, the effect of photonic crystal can be fulfilled because $a/\lambda_0$ is larger than the band gap formed in the direction of lamination and near $\lambda_0/2n_M=a$. If the period $\underline{a}$ is smaller than the range represented by the above condition, the characteristic of the multilayer structure becomes near to that of a homogeneous medium with the average refractive index.

In the optical device configured as shown in Fig. 1, a periodic multilayer film 1 is formed on a surface 2a of a transparent parallel plane substrate 2. A surface 1b of the multilayer film 1 is exposed to air. This multilayer film 1 is an example of the periodic multilayer structure described above.

when beam with a wavelength λ is made incident on an end surface 1a of the multilayer film 1, a large part of beam serves guided beam 6 in the inside of the multilayer film 1. A part of beam, however, serves as beam 5 leaked to the substrate side. That is, the transparent substrate functions as a medium tangent to the periodic multilayer structure.

Another part of beam serves as beam 4 leaked to the air side. That is, the air functions as a medium tangent to the periodic multilayer structure.

The more preferable condition for the optical device according to the present invention will be discussed here. Assume now beam propagated in the photonic crystal in the case where the XY plane in the structure shown in Fig. 2 is used as an incident end surface so that plane wave (TH-polarized beam) is made perpendicularly incident on the end surface in the Z-axis direction.

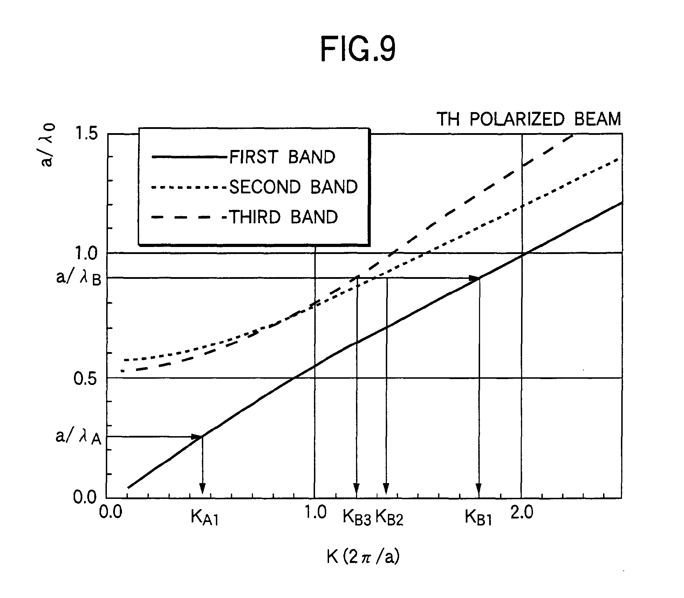

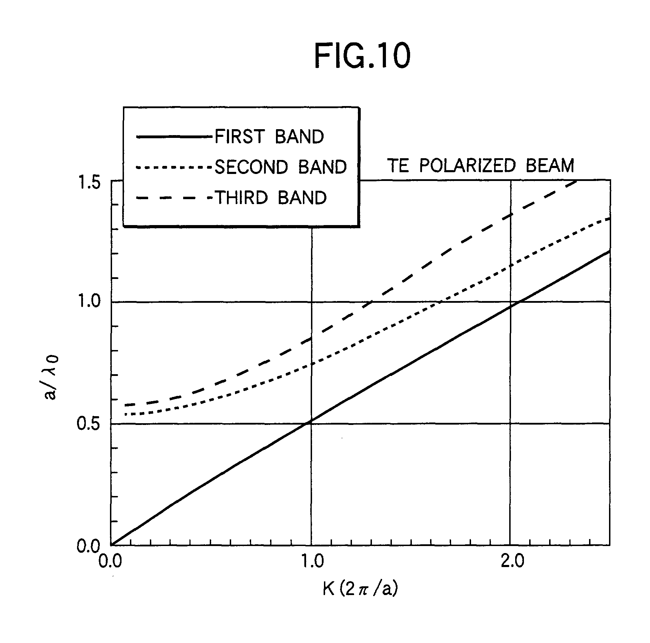

Fig. 9 shows the change of the $a/\lambda_0$ value in the Z-axis direction from the origin in each band diagram (TH) of Fig. 4. Similarly, Fig. 10 shows the change of the $a/\lambda_0$ value in the Z-axis direction from the origin in each band diagram (TE) of Fig. 5. The second and third bands shown in Fig. 4 are replaced by each other halfway in Fig. 9 because the bands cross each other in Fig. 9. As. shown in Fig. 9, when the wavelength of incident beam in vacuum is $\lambda_A$, a wave vector $k_{A1}$ corresponding to the first band is present in the photonic crystal. In other words, wave with a period $\lambda_{A1} = 2\pi/k_{A1}$ propagates in the photonic crystal in the Z-axis direction (the wave hereinafter referred to as "first band beam").

When the wavelength of incident beam in vacuum is $\lambda_B$, however, wave vectors $k_{B1}$, $k_{B2}$ and $k_{B3}$ corresponding to the first, second and third bands respectively are present. Hence, first band beam with a period $\lambda_{B1} = 2\pi/k_{B1}$, second band beam with a period $\lambda_{B2} = 2\pi/k_{n2}$ and third band beam with a period $\lambda_{B3} = 2\pi/k_{B3}$ propagate respectively in the photonic crystal in the Z-axis direction. The second band is, however, an "uncoupled" band in this structure, so that there is no propagation in practice. The principle of the uncoupled band has been described in literature such as Physical Review B, Vol. 52, p.7982, 1995, Physical Review Letters, Vol.68, p. 2023, 1995, and so on.

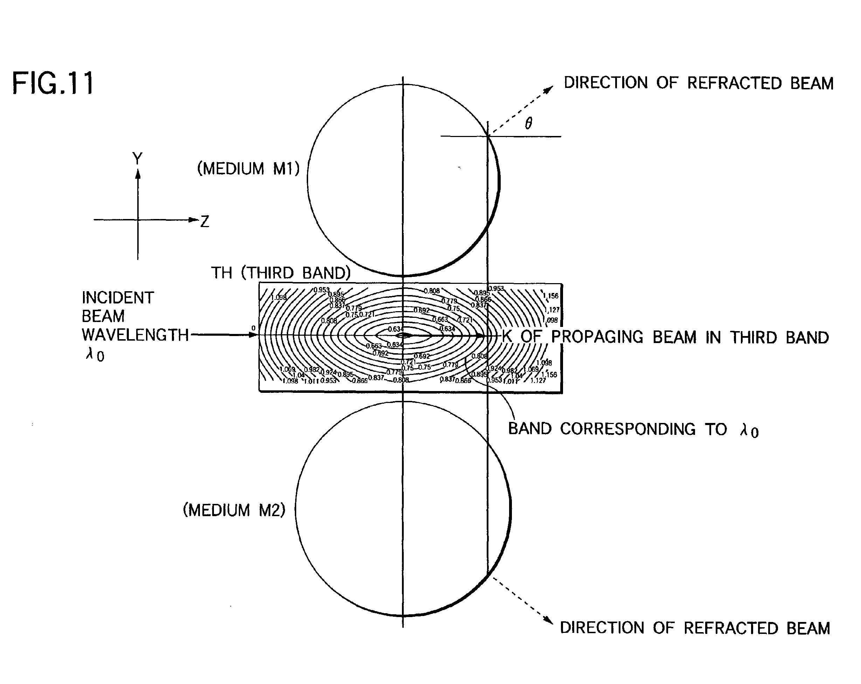

Fig. 11 shows, in the third band, the relation between beam propagated in the Z-axis direction and refracted beam toward media M1 and M2 tangent to opposite surfaces of the multilayer structure in the case where incident beam 3 with a wavelength λ enters the periodic multilayer structure. The beam propagated in the third band is made to exit as refracted beam at an angle θ corresponding to the wave vector $\underline{k}$, from the interface between the multilayer structure and the medium M1 tangent to the surface of the multilayer structure. As is obvious from Fig. 11, in order to make the refracted beam exit, the refractive index of the medium expressed by the radius of the circle needs to be larger than a predetermined value. Because the radius of the circle is $2\pi n/\lambda_0$ when $\underline{n}$ is the refractive index of the medium, the refracted beam can be made to exit if the following expression can be satisfied.

$$k < 2\pi n/\lambda_0$$

Because the angle θ of the refracted beam is constant, the exit beam serves as luminous flux with very good directivity.

The condition for the spectroscopic device using the refracted beam means will be described below.

Because the period of beam in the photonic crystal with respect to the wavelength $\lambda_0$ in vacuum is $2\pi/k$ (for example, the horizontal axis in Fig. 9), $\lambda_0/(2\pi/k)$ is defined as an effective refractive index. As it can be understood from Fig. 9, $a/\lambda_0$ and $\underline{k}$ in the first band beam as the lowest order band beam are approximately proportional to each other so that the chromatic dispersion of the refracted beam is small because the effective refractive index hardly changes in accordance with $\lambda_0$. In the second or third band, however, the relation between $a/\lambda_0$ and $\underline{k}$ is largely displaced from such proportional relation, so that the effective refractive index varies largely in accordance with the slight change of $\lambda_0$. That is, very large chromatic dispersion occurs in the refracted beam, so that the multilayer structure. can be used as a spectroscopic device. This is a kind of so-called super-prism effect. The super-prism effect has been proposed in the literature Physical Review B, Vol. 58, p.10096, 1998.

Though not shown in the drawings, the fourth band et seq. exhibit large chromatic dispersion. It is, however, preferable to use the low-order bands such as the second band and the third band in order to prevent the bands from overlapping each other. Because the "uncoupled" band cannot be used as described above, the most preferred band is a "second coupled band with respect to the lowest-order band". In Fig. 9, the third band corresponds to the second coupled band.

When $n_M$ is the average refractive index (which will be described later) of the multilayer structure in one period, only the first band is present practically in the following range (see Figs. 4 and 5).

$$a/\lambda_0 \leq 1/2n_M$$

Because the first band is unsuitable for use as described above, the period $\underline{a}$ of the multilayer structure with respect to the wavelength $\lambda_0$ used needs to satisfy the relation:

$$\lambda_0/2n_M \leq a$$

When $n_s$ is the refractive index of the medium with respect to the wave length $\lambda_0$ used and $k_s$ is the wave vector of a coupled band which is not the lowest-order band, as described above, the condition for occurrence of refraction is as follows.

$$0 < k_s < 2\pi n_s/\lambda_0$$

or

$$0 < k_s \cdot \lambda_0/(2\pi \cdot n_s) < 1$$

In the multilayer structure shown in Fig. 3, there is a large difference between the structure in the X-axis direction and that in the Y-axis direction, so that the effective refractive index varies according to the direction of polarization. This is obvious from the fact that the graph in Fig. 9 (TH-polarized beam) is different from that in Fig. 10 (TE-polarized beam). Hence, the angle θ of the refracted beam with respect to the multilayer structure varies in accordance with the TE-polarized beam and TH-polarized beam, so that the multilayer structure has the function of separating polarized beam.

Hence, the spectrum and polarization separation of wavelength can be performed simultaneously by the optical device according to the present invention. Hence, the function obtained by a combination of a background-art diffraction grating and a polarization separating device can be achieved by a single device, so that the optical system can be simplified.

The periodic multilayer structure is not limited to the configuration of two kinds of materials as shown in Fig. 3. Three or more kinds of materials may be used as constituent members of the periodic multilayer structure. The respective layers as to the refractive indices and thicknesses thereof need to be laminated in a predetermined period. The periodic multilayer structure is generally constituted by a laminate of $\underline{n}$ kinds of materials (in which $\underline{n}$ is a positive integer) . Let $n_1$, $n_2$, ..., and $n_n$ be the refractive indices of materials 1, 2, ..., and $\underline{n}$ constituting one period. Let $t_1$, $t_2$, ..., and $t_n$ be the thicknesses of the materials 1, 2, ..., and $\underline{n}$ respectively. The average refractive index $n_M$ per period in the multilayer structure with respect to the wavelength $\lambda$ used is defined as follows:

$$n_M = (t_1 \cdot n_1 + t_2 \cdot n_2 + ... + t_n \cdot n_n)/a$$

in which one period $\underline{a}$ is given by the expression:

$$a = t_1 + t_2 + ... + t_n$$

As shown in Fig. 11, refracted beam can be taken out from opposite sides of the multilayer structure. When the refractive index of the medium M1 is lower than that of the medium M2, the condition of refracted beam can be classified into the following three groups:

(1) there is no refracted beam generated on the M1 and M2 sides;
(2) refracted beam is generated only on the M2 side; and
(3) refracted beam is generated on the M1 and M2 sides.

If refracted beam is to be concentrated into a side, the condition of (2) can be selected. If refracted beam on both sides is to be used individually, the condition of (3) can be selected. In the condition of (1), the multilayer structure cannot be made to function as the optical device according to the present invention.

Further, leaked beam may be generated not on the substrate side but on the air side. In this case, the air is treated as a medium having a refractive index of 1. When leaked beam is generated on the air side, it is preferable that no protective layer is attached to the air-side surface of the multilayer film (cf. layer 7).

When a reflection layer is provided on a surface of the multilayer structure in order to prevent the intensity of refracted beam from being reduced due to division of incident beam, the refracted beam can be concentrated into a side opposite to the reflection layer to thereby increase the intensity of the refracted beam. When, for example, air (or vacuum) is used as the medium M1, the wavelength dispersion of the refracted beam can be maximized but refracted beam toward the M2 side is always generated. Therefore, when, for example, such a reflection layer is provided in the boundary between the multilayer structure and the medium M2, the refracted beam can be concentrated into the air side.

As is obvious from Figs. 9 and 10, beam propagated in the first band is always present under the condition that beam in the second band et seq. propagates in the inside of the multilayer structure. Because the first band beam is unsuitable for wavelength dispersion, the first band beam becomes a loss in terms of the efficiency of utilizing incident beam. According to the inventors' simulation, it is found that the larger the refractive index ratio of materials constituting the multilayer structure, the larger the ratio of beam propagated in the second band et seq. (to beam propagated in the first band). Accordingly, it is possible to improve the efficiency of utilizing incident beam.

The material of the photonic crystal used in the present invention is not particularly limited so long as the material can be kept transparent in the wavelength used. Examples of the suitable material may include silica, titanium oxide, silicon, tantalum oxide, niobium oxide, magnesium fluoride, etc. which are generally used as materials of a multilayer film and excellent in durability and low in film-forming cost. If the refractive index ratio of the materials is small, the modulating effect may be weakened so that the expected effect cannot be exerted. Hence, it is desirable that the maximum refractive index ratio of the materials is kept 0.1 or higher. If the materials are selected suitably, the effect of the present invention can be exerted in a wavelength range of from 200 nm to 20 μm generally used.

As a method for forming the muyltilayer film, it is possible to use vacuum evaporation, sputtering, ion-assist evaporation, a CVD method, or the like.

Even in the case where the respective layers constituting the photonic crystal change continuously in terms of refractive index, the same characteristic as described above can be obtained if the refractive index difference is kept between the respective layers.

The material of the substrate is not particularly limited if the material can be kept transparent in the wavelength used. Examples of the suitable material are compound semiconductors such as soda lime glass, optical glass, silica, silicon, gallium arsenide, and so on. If there is little limitation in temperature characteristic, etc., aplasticmaterial may be used as the material of the substrate.

It is the simplest that the structure of the multilayer film in one period is constituted by two layers equal in physical thickness to each other. The average refractive index and band structure may be adjusted by means of (1) changing the thickness ratio of the two layers, (2) increasing the number of layers to three or more and (3) using three or more kinds of film materials so as to improve demultiplexing characteristic, polarization characteristic, efficiency of utilizing incident beam, etc. of the multilayer structure.

In the present invention, for example, a multilayer structure having periods in a direction parallel to a surface of a plane substrate may be produced on the plane substrate so that the multilayer structure can be used as a flat-plate-like optical circuit part.

Although the above description has been made upon the configuration in which incident beam is made incident on an end surface of the multilayer structure and made to exit from a surface parallel to the layer surfaces, the present invention may be applied to the case where incident beam is replaced by exit beam. In this case, if the multilayer structure has the same structure as described above, the relation between incident beam and exit beam is reverse to that in the case where beam is made incident on the end surface. Hence, incident beam enters the multilayer structure at a predetermined angle with respect to a surface of the multilayer structure. If a suitable incident angle is set in accordnace with the wavelength, inciden t beam propagates along the layer surfaces of the multilayer structure and is made to exit from the end surface. That is, the obtained device has a function of multiplexing beam with different wavelengths.

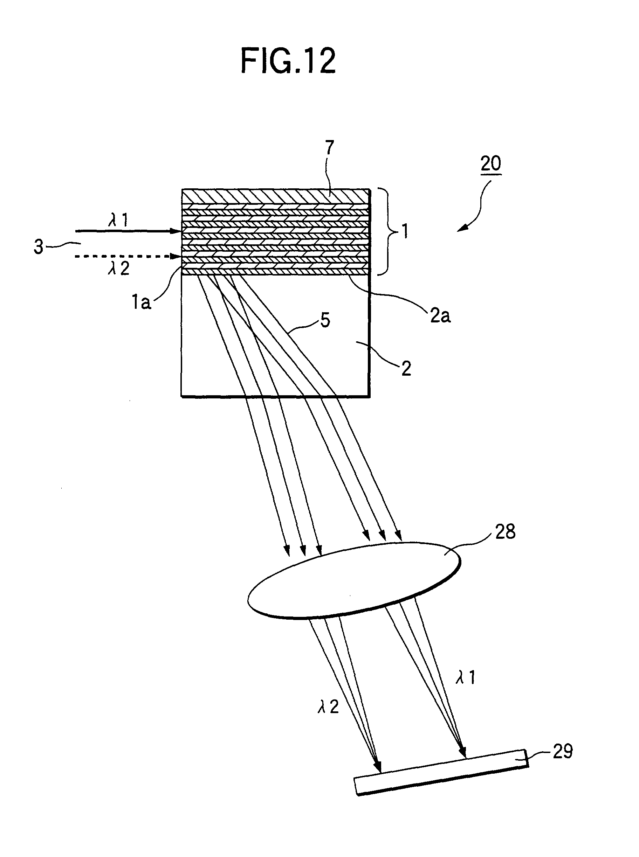

The optical device described above can be configured as a spectroscopic device as shown in Fig. 12. Like Fig. 1, aperiodic multilayer structure 1 is formed on a substrate 2 to thereby form an optical device 20 having a spectroscopic function. In this example, a reflection layer (protective layer) 7 is provided on a surface of the multilayer structure in order to make demultiplexed beam 5 exit from the substrate 2 side. Hence, refracted beam made to exit from the surface side is reflected to improve the efficiency of utilizing the beam as demultiplexed beam. Incident beam 3 containing a plu-

rality of wavelengths $\lambda_1$, $\lambda_2$, ... is made incident on the end surface 1a of the multilayer structure. A lens or the like is used as an input means so that incident beam is coupled spatially. Incident beam may be coupled by use of other means such as an optical fiber, an optical waveguide, or the like.

The incident beam is made to exit from.the substrate 2 side at an angle varying according to the wavelength on the aforementioned principle, so that the beam forms demultiplexed beam 5. When the beam is condensed by a lens 28, the condensed beam spots can be made incident on different positions on the beam-receiving surface of a beam detecting means 29. If the beam detecting means is constituted by an array of beam-receiving devices, the beam detecting means can be set so that beam spots with different wavelengths can be received by different devices. Alternatively, a plurality of optical fibers may be arranged so that beam with different wavelengths can be made incident on different optical fibers.

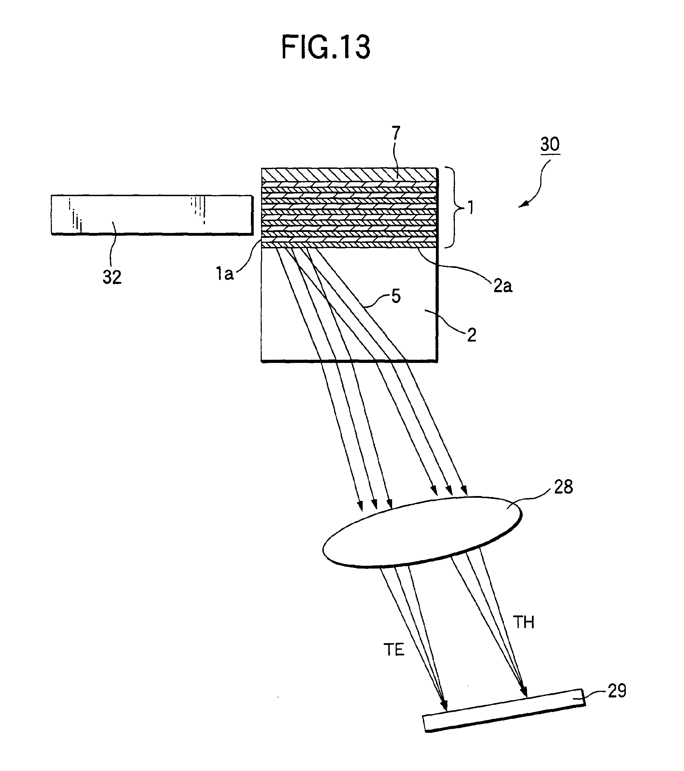

Because the optical device has a polarization separating function, the optical device can be configured as a polarization separating apparatus 30 as shown in Fig. 13. Beam containing a plurality of polarized beam components, for example, beam propagated in a single-mode optical fiber 32 is made incident on the end surface 1a of the multilayer structure 1. The incident beam is made to exit from a surface of the multilayer structure at different angles according to the different polarized beam components. When the beam components are condensed by a lens 28 in the same manner as in the spectroscopic apparatus, the condensed beam spots can be made incident on different positions on the beam-receiving surface of the beam detecting means 29.

Alternatively, beam having different wavelengths each containing a plurality of polarized beam components may be made incident so that wavelength separation (demultiplexing) and polarization separation can be performed simultaneously.

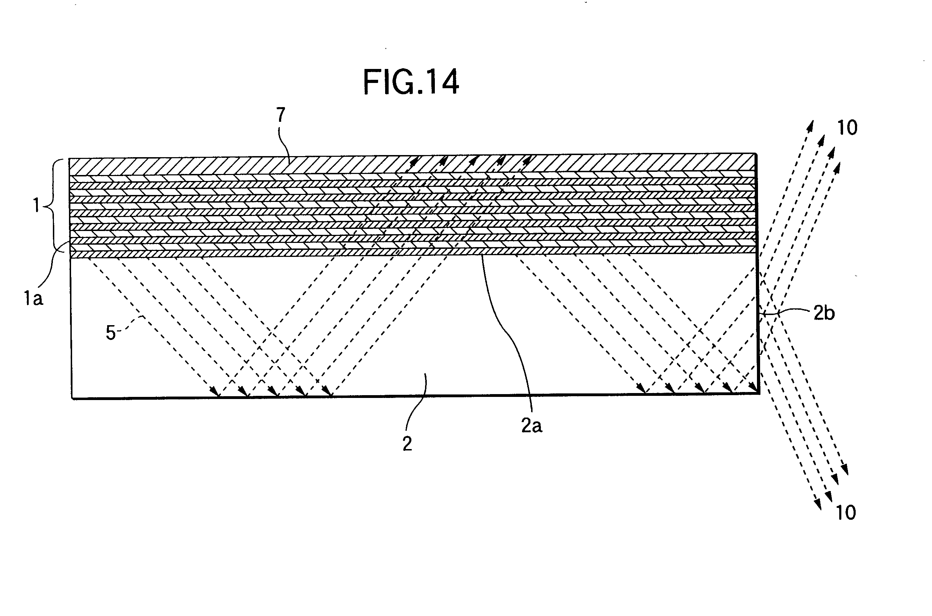

When the substrate 2 is constituted by parallel planes each having a sufficient large size in the direction of guiding beam rays as shown in Fig. 14, leaked beam 5 is repeatedly totally reflected in the substrate 2 and made to exit from the end surface 2b of the substrate 2 as luminous flux 10 having a width equal to the width of the end surface 2b. In this case, exit beam is separated into two directions so that the intensity of each separated beam component is weakened. However, because the width of the exit surface becomes approximately equal to the thickness of the substrate, the resulting beam can be provided as narrow linear luminous flux even if the resulting beam is not condensed by a lens or the like. When a cylindrical convex lens or the like is further used, the narrow linear image can be changed nearly into a point image so that the intensity of beam can be improved.

Example 1

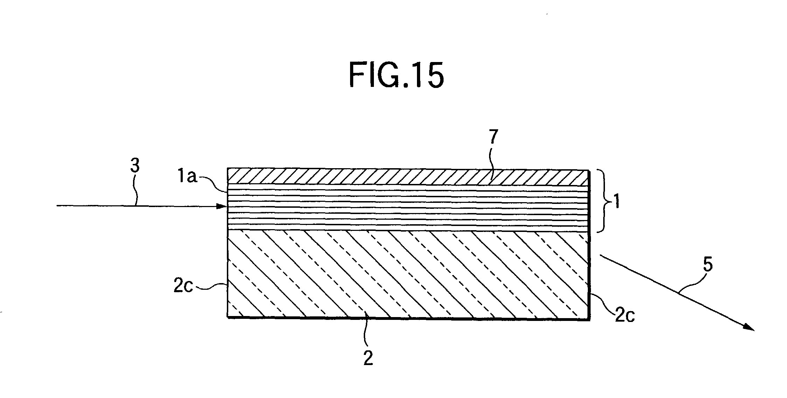

As shown in Fig. 15, a multilayer film 1 was formed on a surface of a parallel plane substrate 2 (of soda lime glass) having a thickness of 1 mm. The thickness of the substrate 2 may be generally selected to be in a range of from 0.1 to 2 mm. A thin film of silica (thickness $t_1$ = 150 nm) and a thin film of titanium oxide (thickness $t_2$ = 150 nm) were formed successively on a surface of the substrate so as to form one period. After this operation was repeated by 20 periods (40 layers) in total, a silica film 2 μm thick was attached thereto as a protective film 7.

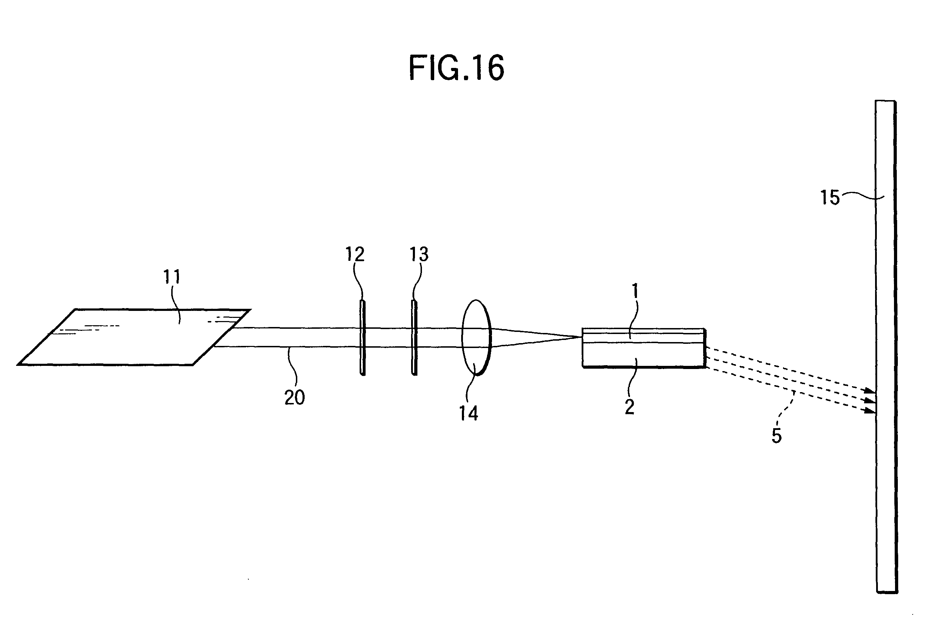

Opposite end surfaces 2c of the substrate were cut perpendicularly to other surfaces of the substrate and polished to form a width of 10 mm. An optical system shown in Fig. 16 was used so that laser beam was made incident on an end surface 1a of the multilayer film portion (6 μm thick).

A wavelength-tunable laser was used as a laser beam source 11. After laser beam 20 emitted from the laser beam source 11 passed through a quarter-wave plate 12 and a crystal polarizer 13, the beam was converged practically into NA = 0.1 by an objective lens 14 so as to be perpendicularly incident on the multilayer film 1 placed in the position of the focal position.

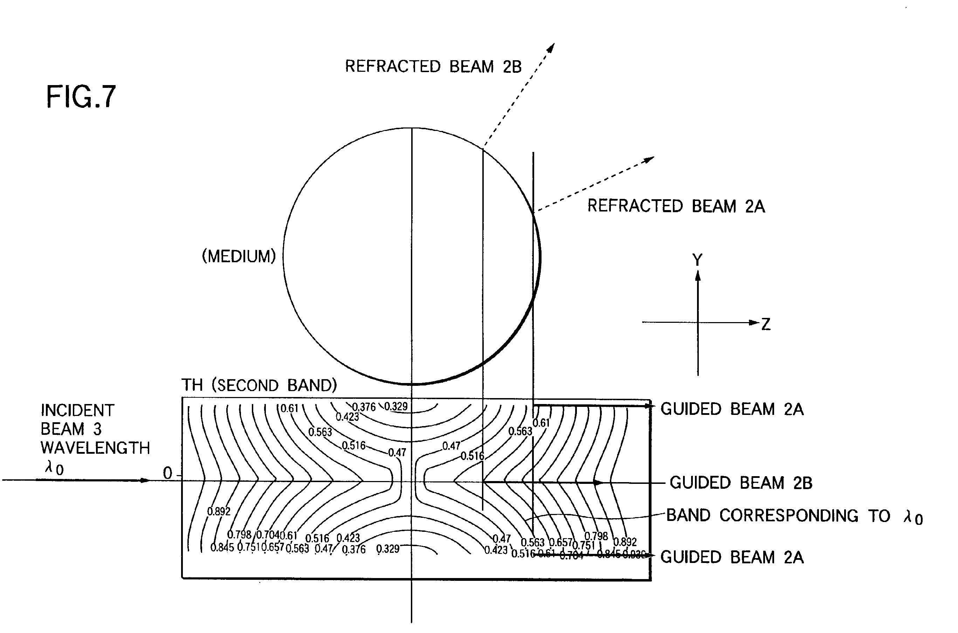

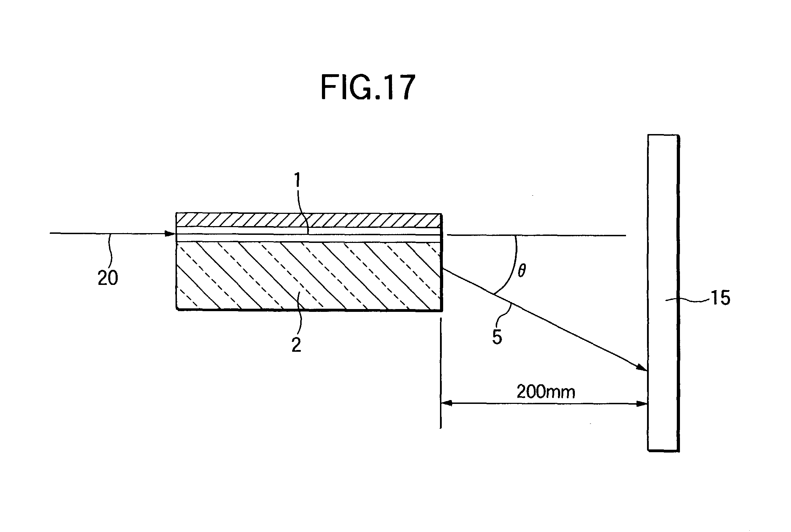

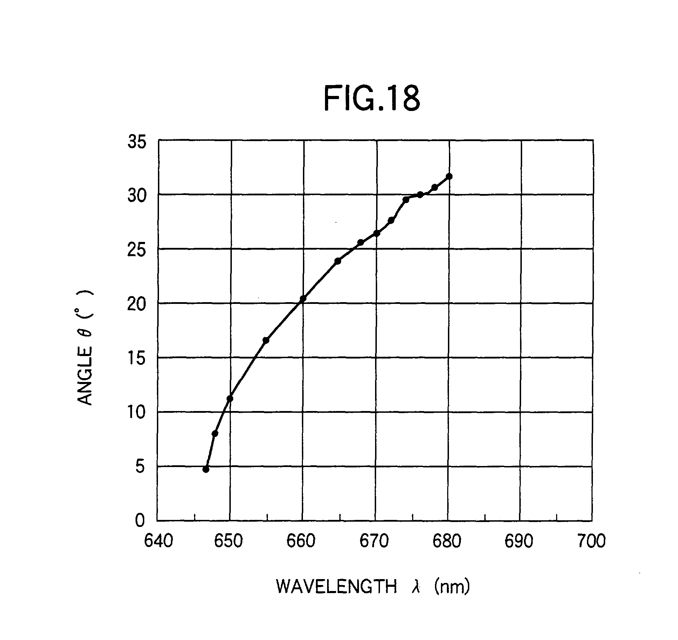

As a result, when TH linearly polarized beam was made incident, linear leaked beam about 2 mm wide and about 50 mm long (in a direction perpendicular to Fig. 17) was projected on a screen 15 distanced by about 200 mm from the multilayer film 1, as shown in Fig. 17. The leaked beam was emitted outward along the path shown in Fig. 14. As shown in Fig. 18, the angle θ exhibited a change of about 27 degrees in accordance with the wavelength is change of about 33 nm when the wavelength is changed from 647 nm to 680 nm. This angle change corresponded to the guided beam 2A shown in Fig. 7. It could be said that chromatic dispersion 10 times as large as that obtained in a background-art diffraction grating was obtained.

Example 2

A multilayer film 1 was formed on a surface of a parallel plane substrate 2 (of quartz glass) having a thickness of 1 mm. A thin film of titanium oxide (thickness $t_1$ = 212 nm) and a thin film of silica (thickness $t_2$ = 212 nm) were formed successively on a surface of the substrate so as to form one period. After this operation was repeated by 20 periods (40 layers) in total. The surface of the multilayer film 1 tangent to air was the silica layer.

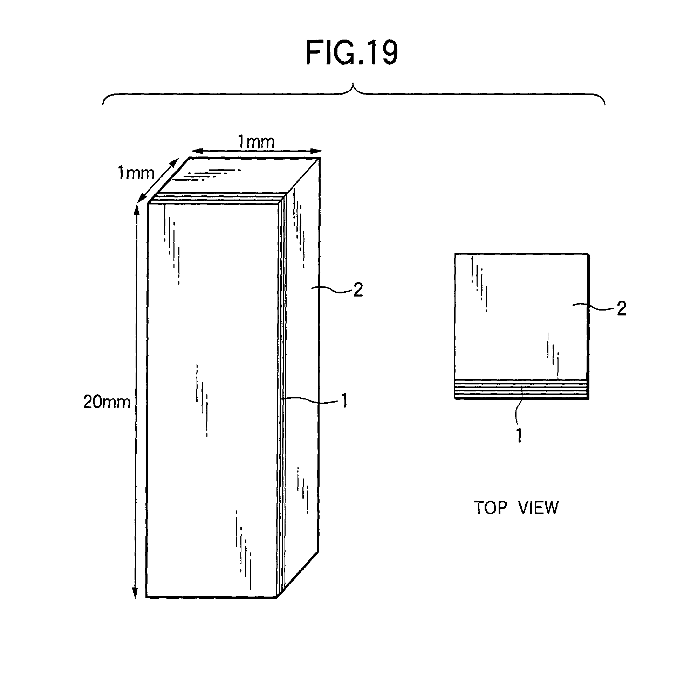

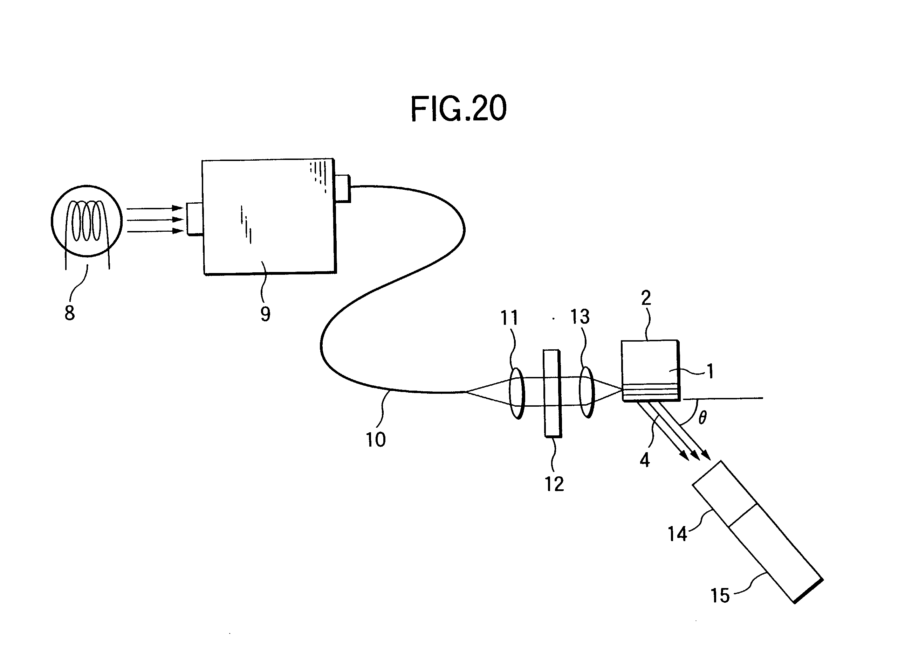

The substrate was cut and polished to form a rod-like sample 1 mm wide and 20 mm long (Fig. 19). Chromatic dispersion obtained by the sample was measured by a system shown in Fig. 20.

As a beam source, there was used a substantially monochromatic beam source in which white beam of an xenon lamp became mono chromatic by a monochromator. After beam emitted from the monochromator and passed through a multi-mode optical fiber, the beam was formed into substantially parallel luminous flux to pass through a crystal polarizer 13. The beam was formed into substantially parallel luminous flux converged practically into NA = 0,1 by an objective lens 14 so as to be incident on the perpendicular end surface of the multilayer film of the sample placed in the position of the focal position.

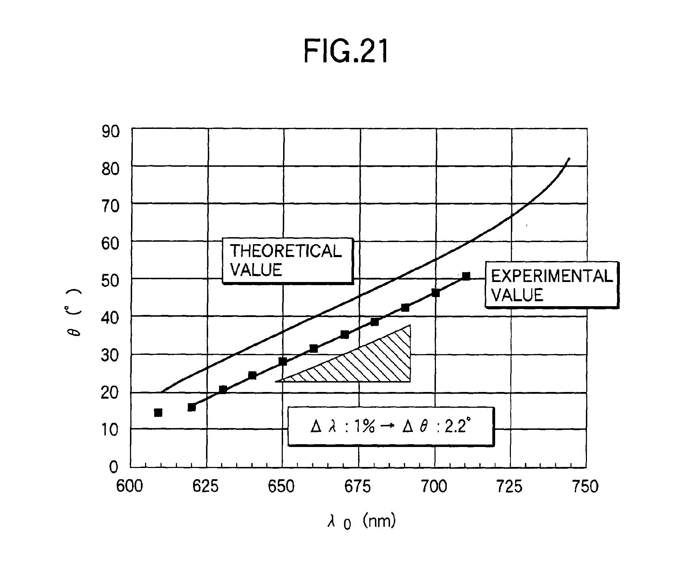

The angle of the air-side refracted beam in the case where incident beam was made into the TE-polarized beam by the crystal polarizer 13 was measured by a visual CCD camera having an f-θ lens system. Fig. 21 shows the relation between the directional angle θ and the wavelength $\lambda_0$ of incident beam. The "theoretical value" in Fig. 21 was a value of the refraction angle of the third band beam obtained on the basis of results of band calculation according to a plane wave method. The refraction angle θ changed by $\Delta\theta \fallingdotseq 2.2°$ when the change $\Delta\lambda$ of the wavelength $\lambda_0$ was 1 %.

The aforementioned chromatic dispersion had a value far larger than that obtained by the general slit type diffraction grating.

In the refraction angle θ was in a range of from 20° to 60° as represented by the experimental value, particularly intensive refracted beam was obtained. Hence, of the range of $k_s \cdot \lambda_0/(2\pi \cdot n_s)$ defined as above, the further desirable range was a range to make the refraction angle in a range of from 20° to 60°, that is, the following range:

$$\cos 60° \leq k_s \cdot \lambda_0/(2\pi \cdot n_s) \leq \cos 20°$$

According to the experiment, there was observed a phenomenon that refracted beam appeared particularly intensively when the wavelength of the beam was in a range of about ±10 % in the wavelength to make the ratio of $k_s$ to $k_1$ a simple integer ratio, that is, to satisfy the expression:

$$k_s = k_1/m \ (m = 2, 3, 4, ...)$$

Particularly, the preferred range was as follows.

$$0.9k_1/m \leq k_s \leq 1.1k_1/m$$

Particularly, the condition to make $k_s$ the wave vector (m = 2) of the "second coupled band from the lowest-order band" was the condition that could be achieved most easily and preferably.

Although the cause of the aforementioned phenomenon was unknown in detail, it was conceived that resonance might occur when the periods of the propagating beam made an integer ratio so that propagating beam with a wavelength corresponding to $k_s$ was refracted easily

The characteristic of the optical device will be described below on the basis of results of calculation on the condition of (2) or (3).

(Calculation Example 1)

In the following calculation example, the numerical values of wavelength $\lambda_0$ and period $\underline{a}$ are for convenience' sake. If the value of $a/\lambda_0$ is the same, the same result except scale is obtained.

The condition for the structure having each period constituted by two layers as schematically shown in Fig. 2 was set as follows:

Refractive index $n_1$ = 1.44
Refractive index $n_2$ = 2.28
Layer thickness $t_1$ = 0.5a
Layer thickness $t_2$ = 0.5a

in which $\underline{a}$ is the periodic length in the Y direction.

Accordingly, the average refractive index $n_M$ of the multilayer structure was equal to 1.81 ($n_M$ = 1.81).

The refractive index $n_{s1}$ of the medium M1 tangent to a surface of the multilayer structure was set to be 1.50. That is,

$$a/\lambda_0 = 0.730$$

The XY plane in the multilayer structure configured as described above was used as an incident surface so that plane wave (TE-polarized beam) with a wavelength $\lambda_0$ in vacuum was made incident on the incident surface.

On the aforementioned setting condition, photonic band calculation was performed by a plane wave method to thereby obtain the following results.

The magnitude of the wave vector in the first band was as follows.

$$k_1 = 1.46 \cdot 2\pi/a$$

(TE-polarized beam, Z direction)

The magnitude of the wave vector in the third band was as follows.

$$k_s = 0.727 \cdot 2\pi/a$$

(TE-polarized beam, Z direction)

Hence, the ratio of $k_1$ to $k_n$ was as follows.

$$k_1/k_3 = 2.01$$

The ratio was approximately equal to the integer m = 2. Moreover, the relation $\lambda_0/2n_M < a$ was satisfied because the following equation held.

$$\lambda_0/2n_M = 0.378a$$

Moreover, the following equation held.

$$k_n \cdot \lambda_0/(2\pi \cdot n_{s1}) = 0.664 = \cos 48°$$

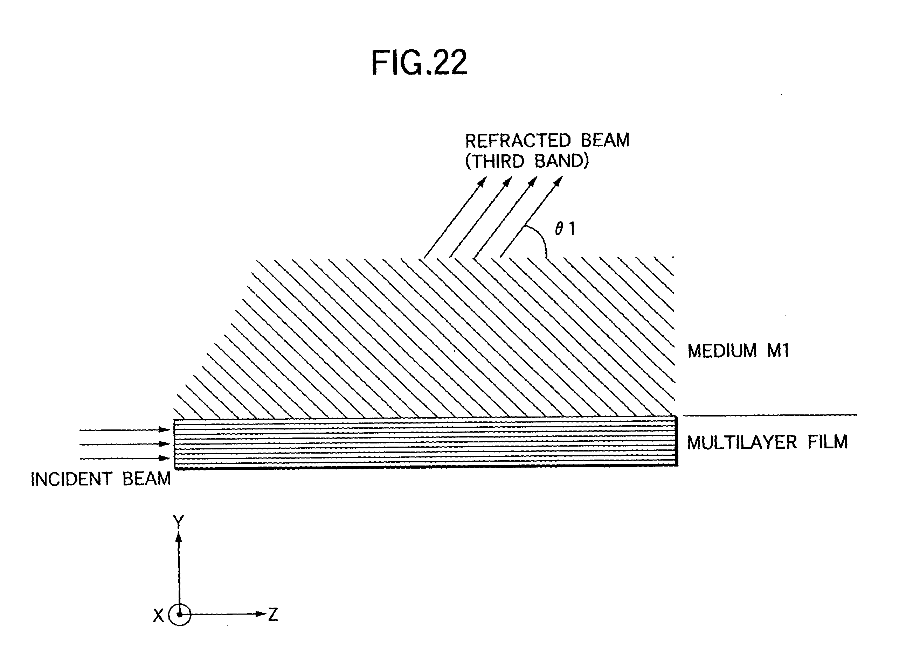

Fig. 22 shows image representation of a result in which electromagnetic waves in the YZ planes of the multilayer structure on the aforementioned setting condition are simulated by a finite element method. In Fig. 22, concentrations represented by stripes express wave surfaces of beam. This means that the larger the amplitude of beam, that is, the intensity of beam, the larger' the contrast in concentration. It is apparent that very intensive refracted beam is generated on the medium M1 side. The refraction angle was as follows.

$$\text{M1 side } \theta 1 = 50°$$

This value was near to the result (48°) of band calculation.

(Calculation Example 2)

Calculation was performed on the following condition in which only the value of $a/\lambda_0$ was different from that in Calculation Example 1.

$$a/\lambda_0 = 0.758$$

Results of calculation will be described below.
The magnitude of the wave vector in the first band was as follows.

$$k_1 = 1.52 \cdot 2\pi/a$$

(TE-polarized beam, Z direction)
The magnitude of the wave vector in the third band was as follows.

$$k_s = 0.798 \cdot 2\pi/a$$

(TE-polarized beam, Z direction)
Hence, the ratio of $k_1$ to $k_s$ was as follows.

$$k_1/k_s = 1.90$$

$$\lambda_0/2n_M = 0.378a$$

$$k_s \cdot \lambda_0/(2\pi \cdot n_{s1}) = 0.702 = \cos 45°$$

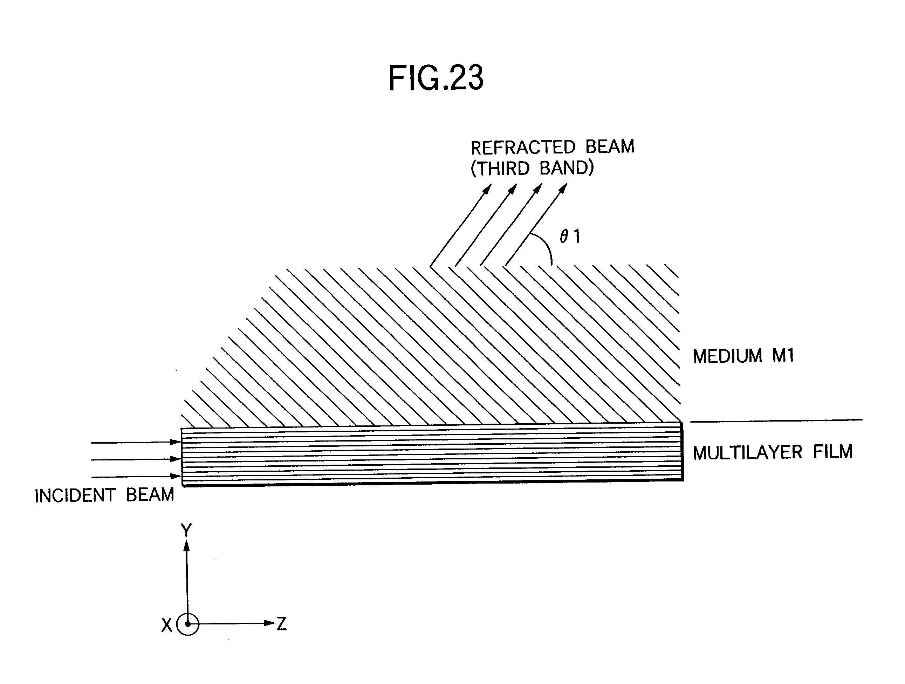

Fig. 23 shows a result in which electromagnetic waves in the YZ planes of the multilayer structure on the aforementioned setting condition are simulated by a finite element method. It is apparent that very intensive refracted beam is generated on the medium M1 side. The refraction angle was as follows.

$$\text{M1 side } \theta 1 = 47°$$

This value was approximately equal to the result (45°) of band calculation.
It is apparent from comparison between Calculation Example 1 and Comparative Example 2 that the difference in incident wavelength causes dispersion in refraction angle. When $\lambda$ is the incident wavelength in Calculation Example 2 ($a/\lambda_0 = 0.758$), the incident wavelength in Calculation Example 1 ($a/\lambda_0 = 0.730$) is $1.038\lambda$ ($\Delta\lambda = 3.8$ %). Because the refraction angle difference is 3°, the refraction angle difference $\Delta\theta$ per $\Delta\lambda = 1$ % is about 0.8°.

(Calculation Example 3)

The condition for the structure having each period constituted by two layers as schematically shown in Fig. 2 was set as follows.

Refractive index $n_1$ = 1.44
Refractive index $n_2$ = 2.28
Y-direction periodic length $\underline{a}$ = 430 nm
Layer thickness $t_1$ = 0.5a
Layer thickness $t_2$ = 0.5a

Similarly, the average refractive index $n_M$ of the multilayer structure was equal to 1.81.
The refractive index $n_{S1}$ of the medium M1 tangent to a surface of the multilayer structure was set to be 1.00 ($n_{s1}$ = 1.00). The refractive index $n_{s2}$ of the medium M2 tangent to a surface of the multilayer structure was set to be 1.44 ($n_{s2}$ = 1.44).
The XY plane in the multilayer structure was used as an incident surface so that plane wave (TE-polarized beam) with a wavelength $\lambda_0$ = 633 nm in vacuum was made incident on the incident surface. That is,

$$a/\lambda_0 = 0.679$$

On the aforementioned setting condition, photonic band calculation was performed by a plane wave method to thereby obtain the following results.

The magnitude of the wave vector in the first band was as follows.

$$k_1 = 1.35 \cdot 2\pi/a$$

(TE-polarized beam, Z direction)

The magnitude of the wave vector in the third band was as follows.

$$k_s = 0.596 \cdot 2\pi/a$$

(TE-polarized beam, Z direction)

Hence, the ratio of $k_1$ to $k_s$ was as follows.

$$k_1/k_s = 2.27$$

Moreover, the relation $\lambda_0/2n_M < a$ was satisfied because the following equation held.

$$\lambda_0/2n_M = 179.4 \text{ nm} = 0.417a$$

Moreover, the following equations were obtained.

$$k_s \cdot \lambda_0/(2\pi \cdot n_{s1}) = 0.877 = \cos 29°$$

$$k_s \cdot \lambda_0/(2\pi \cdot n_{s2}) = 0.585 = \cos 54°$$

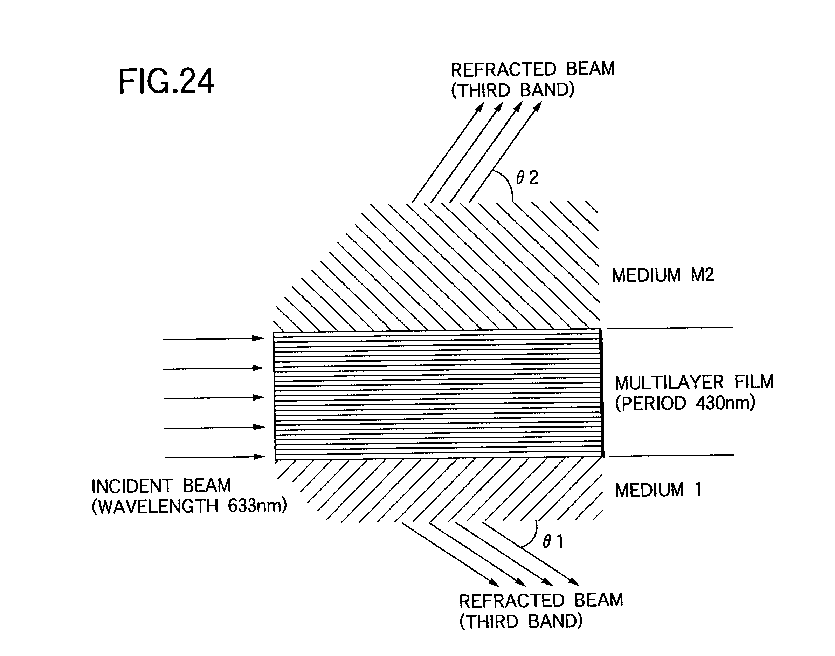

Fig. 24 shows a result in which electromagnetic waves in the YZ planes of the multilayer structure on the aforementioned setting condition are simulated by a finite element method. It is apparent that intensive refracted beam is generated both on the medium M1 side and on the medium M2 side. The refraction angles were as follows.

$$\text{M1 side } \theta 1 = 33°$$

$$\text{M2 side } \theta 2 = 55°$$

These values were approximately equal to the results (29° and 54°) of band calculation.

(Calculation Example 4)

The refractive index $n_{s1}$ of the medium M1 tangent to a surface of the multilayer structure was set to be 1.00 ($n_{s1}$ = 1.00). The refractive index $R_{s2}$ of the medium M2 tangent to a surface of the multilayer structure was set to be 1.44 ($n_{s2}$ = 1.44).

The XY plane in the multilayer structure was used as an incident surface so that plane wave (TE-polarized beam) with a wavelength $\lambda_0$ = 633 nm in vacuum was made incident on the incident surface. That is,

$$a/\lambda_0 = 0.679$$

On the aforementioned setting condition, photonic band calculation was performed by a plane wave method to thereby obtain the following results.

The magnitude of the wave vector in the first band was as follows.

$$k_1 = 1.35 \cdot 2\pi/a$$

(TE-polarized beam, z direction)

The magnitude of the wave vector in the third band was as follows.

$$k_S = 0.596 \cdot 2\pi/a$$

(TE-polarized beam, z direction)

The condition for the structure having each period constituted by two layers as schematically shown in Fig. 2 was set as follows.

Refractive index $n_1$ = 1.44
Refractive index $n_2$ = 2.18
Y-direction periodic length $\underline{a}$ = 200 nm
Layer thickness $t_1$ = 0.5a
Layer thickness $t_2$ = 0.5a

In this case, like the previous case, the average refractive index $n_M$ of the multilayer structure was equal to 1.81 ($n_M$ = 1.81). Moreover, the refractive index $n_{s1}$ of the medium M1 tangent to a surface of the multilayer structure was set to 1.50 ($n_{s1}$ = 1.50).

The XY plane in the multilayer structure was used as an incident surface so that plane wave (TE-polarized beam) with a wavelength $\lambda_0$ = 633 nm in vacuum was made incident on the incident surface. That is,

$$a/\lambda_0 = 0.316$$

On the aforementioned setting condition, photonic band calculation was performed by a plane wave method to thereby obtain the following results.

The magnitude of the wave vector in the first band was as follows.

$$k_1 = 0.592 \cdot 2\pi/a$$

(TE-polarized beam, Z direction)

No wave vector exists in the third band (TE-polarized beam, Z direction).

Moreover, $\lambda_0/2n_M$ was smaller than $\underline{a}$ but considerably near to $\underline{a}$ because the following equation held.

$$\lambda_0/2n_M = 174.9 \text{ nm} = 0.875a$$

No first band refracted beam exists because the following equation held.

$$k_1 \cdot \lambda_0/(2\pi \cdot n_{s2}) = 1.25 > 1$$

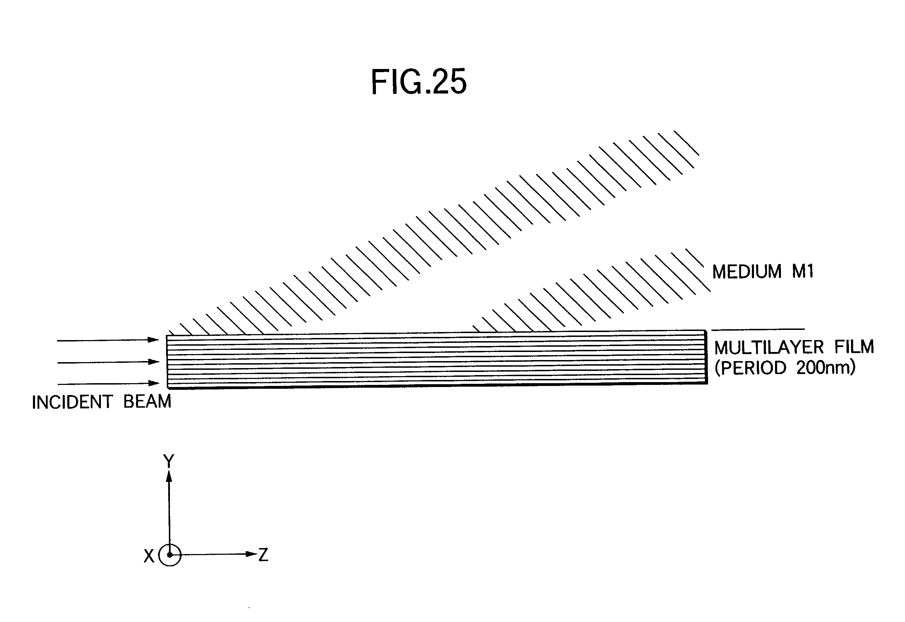

Fig. 25 shows a result in which electromagnetic waves in the YZ planes of the multilayer structure on the aforementioned setting condition are simulated by a finite element method. Because no third band propagating beam exists in the multilayer structure and because there is no condition for refraction of the first band beam, only very weak noise beam can be recognized on the medium side.

In this embodiment, the configuration of the optical device constituted by the multilayer film formed on the parallel plane substrate has been described as a typical example of the multilayer structure. However, the subject of the present invention is not limited to the multilayer film formed on a surface of the substrate. As is obvious from the above description, the effect of the present invention is produced by the multilayer structure so that the substrate is not an essential constituent member. If the aforementioned condition for the multilayer structure is satisfied, the meaning of the substrate is simply to serve as a medium tangent to the periodic multilayer structure optically and only to serve as a support for supporting the structure dynamically.

The beam incidence means in the spectroscopic apparatus is not limited to the aforementioned method of making laser beam incident from a space. For example, an optical fiber or the like may be used as the beam incidence means. As the beam detecting means, it is also possible to use a suitable one in accordance with the purpose in the case where beam is made incident on the beam detecting means directly, the case where beam is detected after the beam is condensed by a lens or the like, made incident on an optical fiber or the like and propagated through the optical fiber, or other cases.

As described above, in accordance with the present invention, a high-resolving-power spectroscopic apparatus or a polarization separating apparatus can be achieved without increase in size of the apparatus and by use of good directivity of beam leaked from a periodic multilayer structure and strong wavelength dependence of the direction of the leaked beam. The multilayer structure can be mass-produced relatively inexpensively by use of an existing technique. Hence, reduction in the cost of these optical devices can be attained.

As described above, in accordance with the present invention, when a plurality of band beam components propagate in the periodic multilayer structure, beam components high in dispersion characteristic can be taken out as refracted beam and the relative intensity of the beam can be increased to improve the output efficiency. Hence, the multilayer structure can be provided as a spectroscopic device having a very large chromatic dispersion angle.

**Claims**

1. An optical device comprising a periodic multilayer structure, wherein an end surface of said multilayer structure which is not parallel to layer surfaces of said multilayer structure is used as at least one of a beam incidence surface and a beam exit surface.

2. An optical device according to Claim 1, wherein the length $\underline{a}$ of one period in said periodic multilayer structure with respect to a wavelength $\lambda$ used is in a range given by an expression:

$$\lambda/2n_M \leq a$$

in which $n_M$ is an average refractive index in the one-period range of said multilayer structure in the wavelength $\lambda$.

3. An optical device according to Claim 1, wherein said one period in said periodic multilayer structure is constituted by layers formed out of different materials.

4. An optical device according to Claim 1, wherein a layer varying continuously in terms of composition or characteristic is contained in a boundary between every two layers constituting said periodic multilayer structure.

5. An optical device according to Claim 1, wherein a maximum refractive index difference between a plurality of materials constituting said periodic multilayer structure is not smaller than 0.1 in a wavelength used.

6. An optical device according to Claim 1, wherein an end surface of said periodic multilayer structure on which beam is incident crosses said layer surfaces of said multilayer structure perpendicularly.

7. An optical device according to Claim 1, wherein an end surface of said periodic multilayer structure from which beam is made to exit crosses said layer surfaces of said multilayer structure.

**8.** An optical device according to Claim 1, wherein an end surface of said periodic multilayer structure on which beam is incident and an end surface of said periodic multilayer structure from which beam is made to exit are parallel to each other.

**9.** An optical device according to Claim 1, wherein said periodic multilayer structure is an optical multilayer film in which one structure formed on a transparent substrate is repeated with respect to a wavelength used.

**10.** A spectroscopic apparatus comprising: an optical device constituted by a periodic multilayer structure as defined in Claim 1; means for making a mixture of various luminous flux having a plurality of wavelengths incident on a beam incidence end surface of said optical device; and means for detecting beam rays made to exit from a beam exit end surface of said optical device at different angles in accordance with said wavelengths.

**11.** A spectroscopic apparatus according to Claim 10, wherein: said periodic multilayer structure is an optical multilayer film in which one structure formed on a surface of a transparent substrate is repeated with respect to a wavelength used; and beam rays made to exit from said multilayer film toward said substrate are totally reflected in the inside of said substrate and taken out from an end surface of said substrate.

**12.** An optical device according to Claim 1, wherein the periodic multilayer structure is regarded as a one-dimensional photonic crystal, the end surface used as the beam incident surface is approximately perpendicular to said layer surfaces of said multilayer structure, and at least one surface parallel to said layer surfaces is provided as a beam exit surface.

**13.** An optical device according to Claim 12, wherein a length of one period is $\underline{a}$ and satisfies a condition given by an expression:

$$\lambda_0/2n_M \leq a$$

when $n_M$ is an average refractive index in one period of said periodic multilayer structure with respect to beam with a wavelength $\lambda_0$ in vacuum.

**14.** An optical device according to Claim 13, wherein a condition:

$$0 < k_s \cdot \lambda_0/(2\pi \cdot n_s) < 1$$

is satisfied when $k_s$ is a magnitude of a wave vector of a coupled band as a not-lowest-order band in said photonic crystal with respect to said wavelength $\lambda_0$ in a direction which is parallel to said layer surfaces andwhich does not have any periodic structure, and $n_S$ is a refractive index of a medium tangent to said surface parallel to said layer surfaces and serving as said beam exit surface of said multilayer structure, with respect to said wavelength $\lambda_0$.

**15.** An optical device according to Claim 1, wherein said periodic multilayer structure is regarded as a one-dimensional photonic crystal, a surface parallel to said layer surfaces of said multilayer structure is provided as said beam incidence surface, and said one end surface used as the beam exit surface is approximately perpendicular to said layer surfaces.

**16.** An optical device according to Claim 15, wherein a length of one period is $\underline{a}$ and satisfies a condition given by an expression:

$$\lambda_0/2n_M \leq a$$

when $n_M$ is an average refractive index in one period of said periodic multilayer structure with respect to beam with a wavelength $\lambda_0$ in vacuum.

**17.** An optical device according to Claim 16, wherein a condition:

$$0 < k_s \cdot \lambda_0/(2\pi \cdot n_s) < 1$$

is satisfied when $k_s$ is a magnitude of a wave vector of a coupled band as a not-lowest-order band in said photonic crystal with respect to said wavelength $\lambda_0$ in a direction which is parallel to said layer surfaces and which does not have any periodic structure, and $n_s$ is a refractive index of a medium tangent to said surface parallel to said layer surfaces and serving as said beam incidence surface of said multilayer structure, with respect to said wavelength $\lambda_0$.

**18.** An optical device according to Claim 14 or 17, wherein said coupled band is a second coupled band from a lowest-order band.

**19.** An optical device according to Claim 14 or 17, wherein a condition given by an expression:

$$\cos 60° \leq k_s \cdot \lambda_0/(2\pi \cdot n_s) \leq \cos 20°$$

is satisfied.

**20.** An optical device according to Claim 14 or 17, wherein said $k_s$ satisfies a condition:

$$0.9k_1/m \leq k_s \leq 1.1k_1/m$$

(m is an integer not smaller than 2) when $k_1$ is a magnitude of a wave vector of the lowest-order coupled band.

**21.** An optical device according to Claim 14 or 17, wherein said medium tangent to said surface of said multilayer structure provided as said beam incidence surface or as said beam exit surface is air or vacuum.

**22.** , An optical device according to Claim 14 or 17, wherein:

said periodic multilayer structure is an optical multilayer film in which one structure formed on a transparent substrate is repeated periodically with respect to a wavelength used; and a surface of said multilayer film tangent to said substrate is provided as said beam incidence surface or as said beam exit surface.

**23.** An optical device according to Claim 14 or 17, wherein said one period in said periodic multilayer structure is constituted by layers formed out of difference materials.

**24.** An optical device according to Claim 14 or 17, wherein a layer varying continuously in terms of composition or characteristic is contained in a boundary between every two layers constituting said periodic multilayer structure.

**25.** An optical device according to Claim 14 or 17, wherein a ratio of a maximum refractive index to a minimum refractive index of a plurality of materials constituting said periodic multilayer structure is not smaller than 1.1 in a wavelength used.

**26.** A spectroscopic apparatus comprising an optical device constituted by a periodic multilayer structure as defined in Claim 14 or 17, means for making a mixture of various luminous flux having a plurality of wavelengths incident on an end surface of said multilayer structure of said optical device, and means for detecting beam rays made to exit from a surface of said multilayer structure at different angles in accordance with the wavelengths.

**27.** A polarization separating apparatus comprising an optical device constituted by a periodic multilayer structure as defined in Claim 14 or 17, means for making a mixture of various luminous flux having a plurality of wavelengths incident on an end surface of said multilayer structure of said optical device, and means for detecting beam rays made to exit from a surface of said multilayer structure at different angles in accordance with polarized beam components.

# FIG.1

(MEDIUM M1)

(MEDIUM M2)

EP 1 184 708 A2

# FIG.2

FIG.3

# FIG.4

(TH FIRST BAND)

(TH SECOND BAND)

(TH THIRD BAND)

# FIG.5

(TE FIRST BAND)

(TE SECOND BAND)

(TE THIRD BAND)

# FIG.6

REFRACTED BEAM 1A

REFRACTED BEAM 1B

(MEDIUM)

Y

Z

TH (FIRST BAND)

INCIDENT
BEAM 3
WAVELENGTH
$\lambda_0$

GUIDED BEAM 1A

GUIDED BEAM 1B

BAND CORRESPONDING TO $\lambda_0$

GUIDED BEAM 1A

0.223
0.186
0.149
0.037
0.074
0.112
0.186 0.149

0.669 0.558 0.446 0.335 0.223 0.223 0.335 0.446 0.558 0.669 0.744
0.707 0.632 0.521 0.409 0.298 0.26 0.26 0.298 0.409 0.521 0.632 0.707
0.595 0.484 0.372 0.372 0.484 0.595

EP 1 184 708 A2

FIG.7

# FIG.8

REFRACTED BEAM 3A

REFRACTED BEAM 3B

(MEDIUM)

Y

Z

TH (THIRD BAND)

INCIDENT
BEAM 3
WAVELENGTH
$\lambda_0$

GUIDED BEAM 3A

1.082  0.968  0.911  0.797  0.911  0.968  1.139
0.854  0.854
0.74  0.683  0.74
0.797  0.569  0.626  0.74  0.797
0.683  0.683
0.74  0.74
1.082
1.139  1.025  0.968  0.911  0.854  0.797  0.854  0.911  0.968  1.025  1.082  1.139

GUIDED BEAM 3B

BAND CORRESPONDING TO $\lambda_0$

GUIDED BEAM 3A

# FIG.9

TH POLARIZED BEAM

FIRST BAND
SECOND BAND
THIRD BAND

$K (2\pi/a)$

# FIG.10

# FIG.11

DIRECTION OF REFRACTED BEAM

θ

(MEDIUM M1)

Y

Z

TH (THIRD BAND)

INCIDENT
BEAM
WAVELENGTH
$\lambda_0$

K OF PROPAGING BEAM IN THIRD BAND

BAND CORRESPONDING TO $\lambda_0$

(MEDIUM M2)

DIRECTION OF REFRACTED BEAM

EP 1 184 708 A2

# FIG.12

# FIG.13

# FIG.14

EP 1 184 708 A2

## FIG.15

FIG.16

EP 1 184 708 A2

# FIG.17

EP 1 184 708 A2

# FIG.18

# FIG.19

1mm

1mm

2

20mm

1

TOP VIEW

2

1

# FIG.20

EP 1 184 708 A2

# FIG.21

# FIG.22

REFRACTED BEAM
(THIRD BAND)

$\theta 1$

MEDIUM M1

MULTILAYER FILM

INCIDENT BEAM

EP 1 184 708 A2

# FIG.23

REFRACTED BEAM
(THIRD BAND)

$\theta 1$

MEDIUM M1

MULTILAYER FILM

INCIDENT BEAM

Y

X → Z

EP 1 184 708 A2

# FIG.24

REFRACTED BEAM
(THIRD BAND)

$\theta 2$

MEDIUM M2

INCIDENT BEAM
(WAVELENGTH 633nm)

MULTILAYER FILM
(PERIOD 430nm)

MEDIUM 1

$\theta 1$

REFRACTED BEAM
(THIRD BAND)

EP 1 184 708 A2

# FIG.25

MEDIUM M1

MULTILAYER FILM
(PERIOD 200nm)

INCIDENT BEAM

EP 1 184 708 A2

# FIG.26